(19) Europäisches Patentamt
European Patent Office
Office européen des brevets

(11) EP 2 443 419 B1

(12) # EUROPÄISCHE PATENTSCHRIFT

(45) Veröffentlichungstag und Bekanntmachung des Hinweises auf die Patenterteilung:
**23.09.2015 Patentblatt 2015/39**

(21) Anmeldenummer: **11707792.5**

(22) Anmeldetag: **23.02.2011**

(51) Int Cl.:
***G01D 5/14*** *(2006.01)*

(86) Internationale Anmeldenummer:
**PCT/EP2011/000879**

(87) Internationale Veröffentlichungsnummer:
**WO 2011/107233 (09.09.2011 Gazette 2011/36)**

(54) **VERFAHREN UND VORRICHTUNG ZUR ERMITTELUNG DES FEINPOSITIONSWERTES EINES BEWEGBAREN KÖRPERS**

METHOD AND DEVICE FOR DETERMINING THE FINE POSITION VALUE OF A MOVABLE BODY

PROCÉDÉ ET DISPOSITIF POUR DÉTERMINER LA VALEUR DE POSITION FINE D'UN CORPS MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2010 DE 102010010560**

(43) Veröffentlichungstag der Anmeldung:
**25.04.2012 Patentblatt 2012/17**

(73) Patentinhaber:
- **Mehnert, Walter**
**85521 Ottobrunn (DE)**
- **Theil, Thomas**
**82340 Feldafing (DE)**

(72) Erfinder:
- **Mehnert, Walter**
**85521 Ottobrunn (DE)**
- **Theil, Thomas**
**82340 Feldafing (DE)**

(74) Vertreter: **Strasser, Wolfgang et al**
**Patentanwälte**
**Strohschänk, Uri, Strasser & Keilitz**
**Rudolf-Diesel-Strasse 14**
**85521 Ottobrunn-Riemerling (DE)**

(56) Entgegenhaltungen:
**EP-A2- 1 052 481**
**EP-A2- 1 415 895**
**DE-A1-102004 062 448**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 443 419 B1

## Beschreibung

Die Erfindung betrifft ein Verfahren zur Ermittlung eines die momentane absolute Position eines bewegbaren Körpers beschreibenden Feinpositionswertes z mit Hilfe eines Positionsgebers gemäß dem Oberbegriff von Anspruch 1 sowie eine zur Durchführung eines solchen Verfahrens geeignete Vorrichtung.

Ein absoluter Positionsgeber umfasst einen so genannten Segmentzähler, der als Erregereinheit einen mit dem bewegbaren Körper fest verbundenen Magnetträger aufweist, an dem mehrere in Bewegungsrichtung voneinander in Abständen angeordnete Permanentmagnete angebracht sind, deren alternierend aufeinander folgende Nord- und Südpole so genannte Mess-Segmente bilden, die den Bewegungsbereich des zu überwachenden bewegbaren Körpers überdecken und durch deren Zählung für diesen ein Grobpositionswert bestimmt wird. Ein solcher absoluter Positionsgeber wird in der DE 102004062448 A1 offenbart.

Zu dieser Zählung sowie zur Feinauflösung der Mess-Segmente dient eine feststehende Sensoreinheit, die zur Ermittelung des jeweiligen momentanen Feinpositionswertes z wenigstens zwei, beispielsweise von Hallelementen gebildete Sensoren umfasst.

Zwar wird in der vorliegenden Beschreibung überwiegend auf einen Positionsgeber Bezug genommen, bei dem eine mit wenigstens einem Permanentmagneten ausgestattete Erregereinheit und Magnetfeld-Sensoren Verwendung finden, doch stellt dies nur eine bevorzugte Möglichkeit dar. Das erfindungsgemäße Verfahren ist in gleicher Weise auch anwendbar, wenn die Wechselwirkung zwischen Erregereinheit und Sensoren durch eine andere physikalische Größe vermittelt wird. Dies soll dadurch verdeutlicht werden, dass in der vorliegenden Beschreibung statt der Bezeichnung "Magnetsegment" der Ausdruck Mess-Segment verwendet wird. In jedem Fall liefert jeder der wenigstens zwei Sensoren ein elektrisches Sensorsignal.

Häufig werden Positionsgeber schon dann als "absolut" bezeichnet, wenn sie in der Lage sind, bei Ausfall der Hauptstromversorgung mit Hilfe einer Reservebatterie die Mess-Segmente weiterhin korrekt abzuzählen, sodass bei Wiederherstellung der Energieversorgung der richtige Segmentzählwert auch dann sofort zur Verfügung steht, wenn sich der zu überwachende Körper in der Zwischenzeit weiterbewegt hat. Im vorliegenden Zusammenhang wird ein Positionszähler ist demgegenüber nur dann als im strengen Sinn "absolut" bezeichnet, wenn er keine solche Reservebatterie für eine fortgesetzte korrekte Zählung der Mess-Segmente benötigt, weil die hierfür erforderliche elektrische Energie mit Hilfe der Erregereinheit und einer Wiegand-Drahtanordnung aus der Bewegungsenergie des zu überwachenden Körpers entnommen wird. Die vorliegende Erfindung kann in gleicher Weise bei allen diesen Arten von Positionsgebern zum Einsatz kommen.

Aus dem durch Zählung der Mess-Segmente ermittelten Grobpositionswert und dem durch die Auflösung der Mess-Segmente gewonnenen Feinpositionswert z wird mit Hilfe einer Verarbeitungselektronik ein eindeutiger Positionsgesamtwert ermittelt, dessen Genauigkeit der des Feinpositionswertes z entspricht.

Je nach Anzahl der in der Erregereinheit vorgesehenen Permanentmagnete kann ein Positionsgeber, bei dem das erfindungsgemäße Verfahren zum Einsatz kommt, entweder ein einziges oder mehrere fein aufzulösende Mess-Segmente aufweisen. Im ersten Fall erstreckt sich das Mess-Segment über die gesamte Mess-Strecke, d.h. bei einer Linearbewegung z.B. über die gesamte zu überwachende Bewegungsweite des Körpers oder bei einer Drehbewegung über einen Drehwinkelbereich von weniger als 180°, wie dies z.B. der Fall ist, wenn der Schwenkbereich des Gas- oder Bremspedals eines Kraftfahrzeuges erfasst werden soll. Um einen größeren Drehwinkelbereich, insbesondere ein Vollkreis von 360° abzudecken, sind wenigstens zwei Mess-Segmente erforderlich.

Alternativ hierzu wird die Mess-Strecke von mehreren Mess-Segmenten überdeckt. Da die Längen der Mess-Segmente in Bewegungsrichtung im Regelfall nicht exakt gleich sind, liefern die Sensoren quasi-periodische Sensorsignale, wobei jeweils eine halbe Periodenlänge einer Mess-Segmentlänge entspricht. Aber selbst dann, wenn die Mess-Segmentlängen genau gleich wären, würden sich keine im strengen Sinn periodischen Sensorsignale ergeben, weil deren Amplitudenwerte im Normalfall von Mess-Segment zu Mess-Segment unterschiedliche Verläufe haben.

Wegen der angenäherten Periodizität der Sensorsignale können die Feinpositionswerte z unabhängig davon, ob es sich bei der zu überwachenden Bewegung um eine Linearverschiebung oder eine Drehbewegung handelt, wie Winkelwerte behandelt werden. Dabei ist zu beachten, dass diese Winkelwerte bei einem Drehgeber nur dann den Winkelwerten einer Volldrehung des zu überwachenden Körpers, z.B. einer Welle entsprechen, wenn der Vollkreiswinkel von 360° lediglich von zwei Mess-Segmenten überdeckt wird.

In allen anderen Fällen, wie z.B. bei dem oben erwähnten absoluten Positionsgeber ist der Vollwinkel der Wellendrehung in mehrere, beispielsweise $\lambda$ Mess-Segmente unterteilt. Eine 360° umfassende Periode eines jeden der Sensorsignale entspricht der Winkelerstreckung von zwei Mess-Segmenten und somit nur dem $\lambda/2$-ten Teil einer Volldrehung der Welle. Die dadurch entstehende Unbestimmtheit der tatsächlichen Position wird durch die Zählung der Mess-Segmente aufgefangen. Da die Segment-Zähleinrichtung mehr als $\lambda$ Mess-Segmente zählen kann, bildet ein solcher Positionsgeber einen Multiturn, der eine Vielzahl von Volldrehungen exakt messend verfolgen und auflösen kann.

Wenn sich der zu überwachende Körper bewegt, verändern sich sowohl Grob- als auch Feinpositionswert in Abhängigkeit von der Zeit, so dass die exakte Notation für den Feinpositionswert z(t) lautet. Steht der Körper still, dann hat z - sieht man von durch Rauschen bedingten Schwankungen ab - einen der momentanen Position entsprechenden festen Wert, der sich so lange nicht ändert, bis wieder eine Bewegung eintritt. Die Werte, die z jeweils annimmt, wenn der Körpers zum Stillstand kommt, können voneinander völlig verschieden sein, weil ein Stillstand in den unterschiedlichsten Positionen eintreten kann, von denen jede durch ihren zugehörigen Grob- und Feinpositionswert eindeutig charakterisiert ist.

Zur Ermittelung der Feinpositionswerte z(t) werden im Allgemeinen jedoch nicht die wenigstens zwei Ausgangssignale a(z(t)) und b(z(t)) der Sensoreinheit selbst sondern wenigstens zwei abgeleitete Signale herangezogen, von denen jedes aus jeweils einem der Ausgangssignale a(z(t)) und b(z(t)) insbesondere durch Verstärkung und/oder Digitalisierung und/oder Mittelwertbildung so gewonnen wird, dass die in den momentanen Amplitudenwerten der Ausgangssignale a(z(t)) und b(z(t)) zu jedem Zeitpunkt t enthaltene Information erhalten bleibt, die eine eindeutige Identifikation des zugehörigen Feiripositionswertes z(t) innerhalb des betreffenden Mess-Segmentes ermöglicht.

Zu diesem Zweck werden beim Stand der Technik die wenigstens zwei abgeleiteten Signale vermittels einer Recheneinheit mit Referenzwerten verglichen, die von ideal sinus- bzw. kosinusförmigen Kurven abgeleitet und in einem Festwertspeicher abgelegt sind.

Dies würde aber nur dann zu fehlerfreien Ergebnissen führen, wenn auch die Sensorsignale bzw. die von ihnen abgeleiteten Signale einen ideal sinus- bzw.. kosinusförmigen Verlauf hätten. In der Praxis ist eine solche Bedingung eigentlich nicht realisierbar. Die genannten Signale sind zwar für jedes der einzelnen Mess-Segmente reproduzierbar, weisen aber Abweichungen vom exakten sinusförmigen Verlauf auf, die überdies von Mess-Segment zu Mess-Segment verschieden sind.

Zur Behebung dieses Problems ist es möglich, vor dem ersten Einsatz eines solchen Positionsgebers eine Eichung durchzuführen, mit deren Hilfe die Abweichungen der abgeleiteten Signale vom Idealverlauf erfasst werden, um Korrekturwerte zu ermitteln, die dann bei den eigentlichen Messungen bzw. Positionsbestimmungen Verwendung finden. Genaueres wird hierüber aber nicht gesagt.

Das gesonderte Ablegen von Korrekturwerten in einem eigenen Vergleichswertspeicher ist umständlich und verkompliziert die mathematische Auswertung der abgeleiteten Signale, macht also den gesamten Vorgang zur Ermittlung des jeweiligen Feinpositionswertes z(t) langsam.

Demgegenüber liegt der Erfindung die Aufgabe zugrunde, das eingangs genannte Verfahren auf das Wesentliche zu vereinfachen und damit den apparativen Aufwand grenzwertig zu verringern, um insbesondere unter Verwendung möglichst weniger und kostengünstiger Bauteile eine hoch genaue, hoch auflösende und hoch dynamische Feinpositionsbestimmung zu ermöglichen, bei der weder die Geometrie des Erregerfeldes noch die Geometrie der Sensoranordnung noch multiplikative und/oder additive Störgrößen einen Einfluss auf das Messergebnis haben.

Zur Lösung dieser Aufgabe sieht die Erfindung die im Anspruch 1 niedergelegten Merkmale vor.

Zu der in den Ansprüchen und der weiteren Beschreibung verwendeten Nomenklatur ist folgendes zu sagen:

Es wurde bereits erwähnt, dass es bei den hier betrachteten Verfahren erforderlich ist, wenigstens zwei unterschiedlich verlaufende Sensorausgangssignale zu verwenden, um den momentanen Feinpositionswert identifizieren zu können. In Anwendungsfällen, in denen keine besonders hohen Genauigkeitsanforderungen gestellt werden, ist dies ausreichend, nicht aber wenn hochgenaue Messergebnisse erzielt werden müssen.

Das erfindungsgemäße Verfahren sieht daher vor, dass grundsätzlich sowohl während des Eich- als auch während des Messbetriebs auch mehr als zwei, beispielsweise vier oder sogar 12 oder 16 Sensorsignale erfasst und ausgewertet werden können, wie dies noch genauer erläutert wird.

Um dies anzudeuten, werden die Ausgangssignale der Sensoreinheit mit $a_E(z(t))$, $b_E(z(t))$,.... bzw. $a_M(z(t))$, $b_M(z(t))$,... bezeichnet, wobei die Indizes E und M Signale (und im weiteren Verlauf von diesen abgegriffene Amplitudenwerte bzw. aus letzteren gebildete Mittelwerte) beschreiben, die während des Eichbetriebs (E) bzw. während des Messbetriebs (M) gewonnen und verarbeitet werden. Überall dort, wo eine Aussage über diese Signale von der Betriebsart unabhängig ist, wird der Index E bzw. M weggelassen. Alle Signale sind physikalische Größen, die aus Vorzeichen, Maßzahl und Einheit bestehen.

Wesentlich ist nur, dass zwischen den von den mehreren Ausgangssignalen a(z(t)), b(z(t)),... zu einem beliebigen Messzeitpunkt $t_v$ gleichzeitig abgegriffenen Amplitudenwerten $\Delta a(z(t_v))$, $\Delta b(z(t_v))$,... und dem zu diesem Messzeitpunkt- $t_v$ vom Körper eingenommenen Feinpositionswert $z(t_v)$ eine ein-eindeutige Korrelation besteht.

In einfachen Fällen besitzen die mehreren Ausgangssignale a(z(t)), b(z(t)),... über zwei aufeinander folgende Mess-Segmente hinweg einen angenähert periodischen Verlauf in dem Sinn, dass sie zwei Nulldurchgänge und einen Maximal- und einen Minimalwert aufweisen, stetig verlaufen und dabei von der gegenseitigen Stellung der Sensoren abhängige Phasenverschiebungen besitzen. Dann ist in diesen beiden Mess-Segmenten jedem Feinpositionswert z eine einzige Amplituden-Wertegruppe $\Delta a(z)$, $\Delta b(z)$,...in umkehrbar eindeutiger Weise zugeordnet. Generell gilt aber beim erfindungsgemäßen Verfahren: Für die korrekte Ermittlung der Feinpositionswerte z sind die Amplitudenwerte $\Delta a(z)$, $\Delta b(z)$,... und nicht die Form des jeweiligen Kurvenverlaufes eines jeden der ihnen zugrunde liegenden Ausgangssignale a(z(t)), b(z(t)),... bzw. der diese Kurvenverläufe beschreibenden Funktionen entscheidend; letztere müssen lediglich stetig sein.

Haben die mehreren Ausgangssignale a(z(t)), b(z(t)),..., einen weniger einfachen Verlauf als den eben beschriebenen, sodass er beispielsweise mehrere Maxima und/oder Minima und/oder mehreren Schnittpunkte innerhalb eines Mess-Segments aufweist, so muss nur gewährleistet sein, dass der jeweilige Feinpositionswert $z(t_v)$ immer eindeutig beschrieben ist.

Das Symbol Δ wurde für die abgegriffenen Amplitudenwerte gewählt, um zu verdeutlichen, dass es sich hier jeweils um einen auf einen beliebig gewahlten Nullwert bezogenen "ganzen Amplitudenwert" oder um einen Änderungswert handeln kann, der die Veränderung der betreffenden Amplitude gegenüber der vorausgehenden Feinpositionsmessung wiedergibt.

Die Messzeitpunkte $t_v$ können durch eine Abtast-Taktfrequenz festgelegt werden Alternativ hierzu ist es aber auch möglich, eine Abtastung in Abhängigkeit von einem nicht regelmäßig auftretenden Ereignis durchzuführen, beispielsweise ausgelöst durch eine Positionsänderung des Körpers oder durch eine Datenanforderung des Verwenders der vom Positionsgeber erzeugten Messwerte usw..

Der Begriff "momentaner Feinpositionswert" bezeichnet den Feinpositionswert, welcher zu der vom Körper zum betrachteten Zeitpunkt $t_v$ eingenommenen Position gehört. Er ist, abgesehen von durch Rauschen verursachten Schwankungen, als solcher zeitlich nicht weiter veränderlich, sodass der Einfachheit halber auf das Argument $t_v$ verzichtet und der momentane Feinpositionswert nur noch mit z bezeichnet werden kann. Gleiches gilt für die zum Messzeitpunkt $t_v$ abgegriffenen Amplitudenwerte Δa(z) Δb(z),.... Selbstverständlich ergeben sich zu verschiedenen Messzeitpunkten zumindest dann, wenn sich der Körper bewegt, unterschiedliche Werte von z und für die zugehörigen Amplitudenwerte Δa(z), Δb(z),... jeweils unterschiedliche Maßzahlen, die eventuell auch unterschiedliche Vorzeichen aufweisen können.

Ein wesentlicher Unterschied des erfindungsgemäßen Verfahrens gegenüber dem Stand der Technik besteht darin, dass es bezüglich der Verläufe der Ausgangssignale a(z(t)), b(z(t)),... der Sensoreinheit keinerlei speziellen Annahmen bedarf, wie z.B. "angenähert sinus- und kosinusförmig". Es wird also auf.derartige Verläufe keinerlei Bezug genommen und es werden insbesondere keine Referenzwerte verwendet, die sinus- bzw. kosinusförmige Kurven beschreiben.

Es genügt gemäß der Erfindung völlig, wenn die jeweils gleichzeitig abgegriffenen Amplitudenwerte Δa(z), Δb(z),...eine eindeutige Zuordnung zu oder Korrelation mit dem jeweiligen Feinpositionswert z ermöglichen.

Diese Bedingung bedeutet nicht, dass die abgegriffenen Amplitudenwerte Δa(z), Δb(z),... ihre dem momentanen Feinpositionswert z zugeordneten Größen exakt konstant beibehalten, wenn der zu überwachende Körper in der betreffenden Position bewegungslos steht, bzw. diese Größen immer wieder exakt erreichen, wenn die betrachtete Position z mehrmals nacheinander angefahren wird. "Exakt" kann ohnehin immer nur bedeuten, dass die Schwankungen der Größen der betreffenden Werte bei Stillstand des Körpers bzw. die Differenzen zwischen den Größen der nacheinander erhaltenen Werte kleiner als die jeweils geforderte Messgenauigkeit sind. Mit anderen Worten: Das Rauschen der Amplitudenwerte Δa(z), Δb(z),... sollte im Idealfall kleiner als die gewünschte Messgenauigkeit sein.

Diese Bedingung ist jedoch bei hohen Anforderungen an die Messgenauigkeit allenfalls mit sehr hochwertigen und dementsprechend teueren Sensoren, Verstärkern und Analog/Digitalwandiern zu realisieren. Es sollen hier aber ein Verfahren und eine Vorrichtung der eingangs genannten Art geschaffen werden, die sich mit möglichst kostengünstigen Bauteilen realisieren lassen.

Erfindungsgemäß werden daher im Weiterverarbeitungsprozess nicht einzelne Amplitudenwerte Δa(z), Δb(z),... sondern, für jedes der Signale a(z), b(z),... gesondert, gleichzeitig gebildete Mittelwerte A(z), B(z),..., verwendet. Dies dient dazu, statistische Schwankungen (Rauschen) zu eliminieren.

Da für jeden Mittelwert mehrere, nacheinander anfallende Amplituden-Einzelwerte erfasst und verarbeitet werden, handelt es sich bei jedem der oben erwähnten "Messzeitpunkte" $t_v$ in Wirklichkeit um eine differentielle Zeitspanne zum Zeitpunkt $t_v$. Durch die Verwendung einer hohen Abtast-Taktfrequenz können diese Zeitspannen aber so kurz gehalten werden, dass sich in ihnen die Position des zu überwachenden Körpers zumindest dann nicht merklich ändert, wenn die Bewegungsgeschwindigkeit des zu überwachenden Körpers nicht sehr groß ist. Bei hohen Bewegungsgeschwindigkeiten tritt durch die Mittelwertbildung ein Schleppfehler auf, der zu einer geringfügigen Verminderung der momentanen Genauigkeit führt. Dies ist aber akzeptabel, weil der Schleppfehler korrigierbar ist und die Genauigkeitsanforderungen bei hohen Geschwindigkeiten ohnehin geringer sind.

Um im Eichbetrieb aus den jeweils gleichzeitig abgegriffenen Amplitudenwerten $\Delta a_E(z)$, $\Delta b_E(z)$,... hochgenaue Mittelwerte $\Delta_E(z)$, $B_E(z)$,... bilden zu können, welche die tatsächlichen Gegebenheiten des betreffenden Positionsgebers exakt beschreiben, ist es bevorzugt, dass sich der zu überwachende Körper bzw. die mit ihm gekoppelte Erregereinheit des Positionsgebers im Eichbetrieb mit einer so geringen Geschwindigkeit bewegt, dass der jeweilige Mittelwert gebildet ist, bevor sich der Feinpositionswert z um ein Inkrement geändert hat.

Die so gebildeten Mittelwerte $\Delta_E(z)$, $B_E(z)$,... werden dem jeweiligen exakten Eich-Feinpositionswert μ zugeordnet, welcher der Eicheinheit aufgrund von Informationen bekannt ist, die beispielsweise von einem Eichnormal geliefert werden. Die Eichmittelwerte $A_E(\mu)$, $B_E(\mu)$,... stellen somit echte Referenzwerte dar, die den tatsächlichen Verlauf der Ausgangssignale $a_E(z)$, $b_E(z)$,... der Sensoreinheit des betreffenden Positionsgebers wiedergeben und für den oben beschriebenen günstigen Fall im Vergleichswertspeicher entweder als Wertegruppen oder, weniger günstig als Gruppen von Quotienten $A_E(\mu)/B_E(\mu)$ usw. zusammen mit dem zugehörigen Eich-Feinpositionswert $\mu(A_E, B_E,...)$ ablegt werden.

Bei dem im vorliegenden Zusammenhang mit dem Begriff "Eichbetrieb" bezeichneten Teil des erfindungsgemäßen Verfahrens handelt es sich streng genommen um ein Korrelationsverfahren, vermittels dessen nicht von einem Eichnormal abgegriffene "Markierungen" auf einen "Maßstab" oder "Markierungsträger" des zu "eichenden" Positionsgebers übertragen werden. Vielmehr werden die im Eichbetrieb in aufeinander folgenden Zeitpunkten $t_1$, $t_2$, $t_3$ usw. aus den Ausgangssignalen a(z(t)), b(z(t)),... der Sensoreinheit gewonnenen Gruppen von echten Referenzwerten, von denen jede dem zum jeweiligen Zeitpunkt $t_1$, $t_2$, $t_3$ usw. von der Erregereinheit des Positionsgebers eingenommenen Feinpositionswert $z(t_1)$, $Z(t_2)$, $z(t_3)$ exakt zugeordnet ist, der seinerseits mit dem zu dem betreffenden Zeitpunkt $t_1$, $t_2$, $t_3$ von Eichnormal gelieferten Eich-Feinpositionswert $\mu(A_E(t_1), B_E(t_1),...)$, $\mu(A_E(t_2), B_E(t_2),...)$, $\mu(A_E(t_3), B_E(t_3),...)$, usw. korreliert ist, zusammen mit letzterem und unter Beibehaltung der Verknüpfung mit diesem im Vergleichswertspeicher abgelegt. Es werden also für jeden einzelnen konkreten Positionssensor für eine Vielzahl von Einzelpositionen der Erregereinheit bezüglich der Sensoranordnung, die den Bewegungsbereich des zu überwachenden Körpers mit einer durch die Genauigkeitsanforderungen vorgegebenen Dichte überdecken, echte Referenzwerte gewonnen und zusammen mit dem zugehörigen Eich-Feinpositionswert im Vergleichswertspeicher abgelegt. Diese Referenzwerte werden deshalb als "echt" bezeichnet, weil sie den von Positionsgeber zu Positionsgeber unterschiedlichen Verlauf der jeweiligen Sensorausgangssignale exakt abbilden. Dies ist auch dann möglich, wenn sie in Form von Stützwerten abgespeichert werden. Die Dichte der Positionen, für die jeweils ein eigener Stützwert ermittelt wird, kann zumindest in den Bereichen des jeweiligen Kurvenverlaufs kleiner gehalten werden, in denen eine zu einer hinreichenden Genauigkeit führende Interpolation möglich ist.

Im Messbetrieb genügt es dann, zu einem beliebigen Messzeitpunkt $t_v$ die Amplituden-Werte $\Delta a_M(z)$, $\Delta b_M(z)$,... abzugreifen bzw. zu messen, hieraus die entsprechenden, hier auch als "Messwerte" bezeichneten Mittelwerte $A_M(z)$, $B_M(z)$,... zu bilden und diese einer Rechenschaltung zuzuführen, welche sie am Ende des Verarbeitungsprozesses mit Hilfe vorgegebener mathematischer Operationen gruppenweise nach und nach mit den im Vergleichswertspeicher abgelegten Gruppen von echten Referenzwerten vergleicht. Wird anhand geeigneter Kriterien die "Übereinstimmung" der dem momentanen Feinpositionswert z zugehörigen Messwertgruppe (Messwertmatrix) mit einer im Vergleichswertspeicher abgelegten Gruppe von echten Referenzwerten (Referenzwertmatrix) festgestellt, so wird der zu dieser Referenzwertgruppe gehörende Eich-Feinpositionswert $\mu(A_E, B_E,...)$ aus dem Vergleichswertspeicher entnommen und es wird der momentane Feinpositionswert z nach der Formel $z = m\ \mu$ berechnet, wobei m das Übersetzungsverhältnis der Kopplung zwischen Eichnormal und Erregereinheit ist. Für eine mechanisch starre Kopplung gilt deshalb m = 1. Eine Kopplung, z.B. durch ein Getriebe kann zu beliebigen Werten von m führen. Alternativ kann die Eicheinheit an Stelle von $\mu$ auch den Wert $m\mu$ liefern, sodass die eben beschriebene Berechnung am Ende des Verarbeitungsverfahrens entfallen kann.

Somit dienen die beim Messbetrieb gewonnenen Messwerte als Identifikationssignale oder Adressen in Form einer Matrix zum Auffinden des zugehörigen, im Vergleichswertspeicher abgelegten Eich-Feinpositionswertes, der vom Eichnormal stammt und daher auch dessen Genauigkeit besitzt.

Als geeignetes Übereinstimmungskriterium kann z.B. verwendet werden, dass die aus den Messwerten und den im Vergleichswertspeicher abgelegten Referenzwerten gebildete Differenz von Kreuzprodukten (zumindest näherungsweise) gleich 0 wird. Anders als beim Stand der Technik wird dann aber als momentaner Feinpositionswert z nicht der Wert genommen, der sich aus der mathematischen Verarbeitung von im Vergleichswertspeicher abgelegten (eventuell korrigierten) Referenzkurven ergibt, sondern der zu der identifizierten Referenzwertgruppe gehörende Eich-Feinpositionswert $\mu(A_E, B_E,...)$.

Das erfindungsgemäße Verfahren ermöglicht es also, individuellen Positionsgebern, die lediglich eine hohe Reproduzierbarkeit der von ihnen gelieferten Mess-Signale aufweisen müssen (,was mit einem vergleichsweise geringen technischen Aufwand erreicht werden kann), durch die für jeden von ihnen einzeln durchgeführte "Eichung" bzw. Korrelation mit einem hochgenauen Eichnormal, dessen hohe Genauigkeit zu verleihen. Dies ist wesentlich kostengünstiger, als für jeden einzelnen Positionsgeber einen eigenen hochgenauen Maßstab zu verwenden.

Die Signalverarbeitung, die erforderlich ist, um aus den von den Sensoren abgegebenen Signalen den jeweiligen momentanen Feinpositionswerte $z = m\mu$ zu ermitteln, kann zwar in einer sehr kurzen Zeitspanne durchgeführt werden, doch führt sie bei einer sich sehr schnell bewegenden Erregereinheit zu einem Schleppfehler, in dem Sinn, dass zwar der exakte Feinpositionswert ausgegeben wird, dies aber zu einem Zeitpunkt erfolgt, zu dem sich der zu überwachende Körper und mit ihm die Erregereinheit bereits zu einem neuen Feinpositionswert weiterbewegt hat. Der Schleppfehler drückt somit die Differenz der wahren Stellung der Erregereinheit zum ermittelten Feinpositionswert $z = m\mu$ aus. Der sich ergebende Schleppfehler wächst also mit zunehmender Geschwindigkeit des zu überwachenden Körpers. Er ist aber durch die Inkremente im nachfolgend noch genauer beschriebenen Regelkreis bekannt und kann daher korrigiert werden.

Vorzugsweise erfolgt der Eichbetrieb vor dem eigentlichen Messbetrieb. Dabei kann die Erregereinheit des jeweils zu eichenden Positionsgebers mit einem externen Eichnormal vorzugsweise mechanisch starr verbunden sein (m=1), so dass diese die zu den im Eichbetrieb gewonnenen Eich-Mittelwerten $A_E(\mu)$, $B_E(\mu)$,... gehörenden Eich-Feinpositionswerte $\mu = z$ an eine zum Positionsgeber gehörende Eicheinheit liefert. Das Eichnormal ist vorzugsweise ein hoch genauer optischer Inkrementalgeber.

Alternativ hierzu ist es möglich, anstelle des externen Eichnormals eine interne Eichschaltung zu verwenden, bei der die Korrelation der Erregereinheit mit den Eich-Mittelwerten $A_E(\mu)$, $B_E(\mu)$,...und die Korrelation der Eicheinheit mit den Eich-Feinpositionswerten $\mu$ über die Zeit erfolgen.

Vorzugsweise ist der Bewegungsbereich des zu überwachenden Körpers in mehrere Mess-Segmente unterteilt, die nicht gleich lang sein müssen und einerseits absolut gezählt werden und für die andererseits Feinpositionswerte z ermittelt werden, wobei die Anordnung so getroffen ist, dass sowohl die Ausgangssignale a(z(t)), b(z(t)),...der Sensoreinheit als auch die aus ihnen abgeleiteten Mittelwerte A(z), B(z),... halbperiodisch sind, wobei die Halbperiodenlänge jeweils der Länge der Mess-Segmente entspricht.

Vorzugsweise werden die Sensorsignale von robusten Magnetfeld-Sensoren geliefert. Wegen Divergenz der magnetischen Feldstärke gleich Null (div B = 0) ist hier der eindeutige Bezug des erzeugenden Magnetfeldes zum Messfeld gegeben.

Besonders vorteilhaft ist es, das erfindungsgemäße Verfahren in Verbindung mit einem Drehgeber einzusetzen.

Bei einer besonders bevorzugten Variante des erfindungsgemäßen Verfahrens erfolgt die Mittelwertbildung fortlaufend in der Weise, dass der zuletzt aus einer vorgegebenen Anzahl von vorausgehend erfassten Einzelwerten gebildete, "alte" Mittelwert mit einem ersten Gewichtungsfaktor und der jüngste Einzelwert mit einem zweiten Gewichtungsfäktor versehenen und aus diesen beiden gewichteten Werten ein neuer Mittelwert gebildet wird.

Um diesem Verfahren eine hohe Dynamik, das heißt eine gute Anpassungsfähigkeit an rasche Geschwindigkeitsänderungen der zu überwachenden Bewegung zu verleihen, ist es besonders bevorzugt, die Größe der beiden Gewichtungsfaktoren in Abhängigkeit von der Differenz zwischen dem alten Mittelwert und dem neuen Einzelwert insbesondere in der Weise zu variieren, dass der erste Gewichtungsfaktor um so kleiner und der zweiten Gewichtungsfaktor um so größer gewählt wird, je größer diese Differenz ist und umgekehrt. Dabei wird vorzugsweise die Summe der Gewichtungsfaktoren konstant gehalten.

Vorzugsweise wird die Bildung der Werte-Gruppen durch das Eichnormal getriggert, das aber keine extrem hohe Auflösung sondern nur eine sehr hohe Genauigkeit besitzen muss. In diesem Fall werden dann die echten Referenzwerte $A_E(\mu)$, $B_E(\mu)$,... $\mu(A_E, B_E,...)$ im Vergleichswertspeicher in Form separater Stützwerte abgelegt, zwischen denen zur Ermittlung von Zwischenwerten eine lineare Interpolation durchgeführt wird. Dabei kann die Dichte der Stützwerte an die jeweils erforderliche Genauigkeit so angepasst werden, dass der durch die lineare Interpolation entstehende Fehler unterhalb der zulässigen Fehlergrenze liegt. Dies führt zu einer erheblichen Speicherplatzeinsparung und einer wesentlichen Erhöhung der Verarbeitungsgeschwindigkeit.

Diese und weitere vorteilhafte Ausgestaltungen des erfindungsgemäßen Verfahrens sowie eine zu seiner Durchführung geeignete Vorrichtung sind in den abhängigen Ansprüchen niedergelegt.

Die Erfindung wird im Folgenden anhand von Ausführungsbeispielen unter Bezugnahme auf die Zeichnung beschrieben. In dieser zeigen:

Fig. 1 ein schematisches Blockschaltbild einer im Eichbetrieb arbeitenden Verarbeitungselektronik eines erfindungsgemäßen Positionsgebers, bei der zwei in der Sensoreinheit vorverarbeitete Ausgangssignale ausgewertet werden,

Fig. 2 ein schematisches Blockschaltbild der im Messbetrieb arbeitenden Verarbeitüngselektronik aus Fig.1,

Fig. 3 eine graphische Darstellung des über dem Feinpositionswert z aufgetragenen Verlaufs von zwei durch die Verarbeitungselektronik der Fig. 1 und 2 auswertbaren, vorverarbeiteten Ausgangssignalen der Sensoreinheit über zwei aneinander anschließende Mess-Segmente im Eichbetrieb,

Fig. 4 ein schematisches Blockschaltbild einer im Eichbetrieb arbeitenden Verarbeitungselektronik eines erfindungsgemäßen Positionsgebers, bei der sechzehn von der Sensoreinheit gelieferte Ausgangssignale voneinander getrennt ausgewertet werden,

Fig. 5 ein schematisches Blockschaltbild der im Messbetrieb arbeitenden Verarbeitungselektronik aus Fig. 4,

Fig. 6 ein schematisches Blockschaltbild einer im Eichbetrieb arbeitenden Verarbeitungselektronik eines erfindungsgemäßen Positionsgebers, bei der sechzehn von der Sensoreinheit gelieferte Ausgangssignale nach der getrennten Verstärkung und Mittelwertbildung zu vier Signalen vorverarbeitet und diese dann weiter ausgewertet werden,

Fig. 7 ein schematisches Blockschaltbild der im Messbetrieb arbeitenden Verarbeitungselektronik aus Fig. 6,

Fig. 8 ein schematisches Blockschaltbild einer im Eichbetrieb arbeitenden Verarbeitungselektronik eines erfindungsgemäßen Positionsgebers, bei der sechzehn von der Sensoreinheit gelieferte Ausgangssignale nach der getrennten Verstärkung aber vor der Mittelwertbildung zu zwei Signalen vorverarbeitet und diese dann weiter ausgewertet werden,

Fig. 9 ein schematisches Blockschaltbild der im Messbetrieb arbeitenden Verarbeitungselektronik aus Fig. 8,

Fig. 10 ein verallgemeinertes Flussdiagramm des Eichbetriebs, wie er z.B. mit den in den Fig. 1 und 4 gezeigten Anordnungen durchgeführt werden kann, und

Fig. 11 ein verallgemeinertes Flussdiagramm des Messbetriebs, wie er z.B. mit den in den Fig. 2 und 5 gezeigten Anordnungen durchgeführt werden kann.

Gleiche Einheiten sind in den Figuren 1, 2 und 4 bis 9 mit den gleichen Bezugszeichen versehen. In den Figuren 1, 4, 6 und 8 anhand derer jeweils der Eichbetrieb geschildert wird, sind die nur für den Messbetrieb erforderlichen Schaltungsteile mit punktierten Linien wiedergegeben. Andererseits ist in den Figuren 2, 4, 7, und 9 das externe Eichnormal 30 weggelassen und die Eicheinheit 31 in punktierten Linien dargestellt, weil sie beim Messbetrieb nicht arbeitet. Wird eine interne Eichwert-Generatorschaltung anstelle eines externen Eichnormals verwendet, so ist sie in der Eicheinheit 31 enthalten. Wenn im Folgenden nicht ausdrücklich auf eine der beiden Betriebsarten (Eichbetrieb oder Messbetrieb) hingewiesen wird, so gilt das jeweils Gesagte für beide Betriebsarten in gleicher Weise. Bei den angesprochenen Signalen sind dann die Indizes E bzw. M weggelassen, die den Eich- bzw. den Messbetrieb kennzeichnen.

Unter Bezugnahme auf die Fig. 1 bis 3 wird das Grundprinzip der Erfindung unter der vereinfachenden Annahme erläutert, dass eine Sensoreinheit 7 verwendet wird, die nur zwei in der erforderlichen Weise gegeneinander "phasenverschobene" Ausgangssignale a(z(t)) und b(z(t) liefert. Dabei wird, ohne dass dies einschränkend zu verstehen ist, auf eine Messanordnung, insbesondere auf eine Anordnung zur Überwachung der Drehbewegung einer Welle Bezug genommen, bei der die Erregereinheit des Positionsgebers einen mit der Welle verbundenen und sich mit dieser drehenden Magnetträger umfasst, der eine Reihe von Permanentmagneten mit alternierender Ausrichtung der Magnetpole so trägt, dass sie in Drehrichtung etwa gleiche Abstande besitzen und Mess-Segmente bilden, deren Längen- bzw. Winkelerstreckungen durch die erfindungsgemäße Anordnung fein aufgelöst werden sollen. Die Welle und ihr Magnetträger sind in den Figuren 1 und 2 nicht dargestellt.

Die zur Ermittlung der Feinpositionswerte z der Welle erforderlichen Signale, werden von einer Sensoranordnung 1 geliefert, die beispielsweise vier Hallelemente I, II, III, IV umfasst, die punktuell angeordnet und paarweise zusammengefasst sind, wie dies durch die Verbindungslinien zwischen den Hallelementen I und II bzw. III und IV ist. Dabei ist jedes Paar antiseriell so geschaltet ist, dass seine Hallelemente von den Magnetfeldern der Permanentmagneten in entgegengesetzter Richtung durchsetzt werden. Wegen der Gegeneinanderschaltung addieren sich also die aus diesen Magnetfeldern resultierenden Signalwerte während sich von außen überlagerte additive Störungen gegenseitig aufheben.

Wegen z.B. ungleicher Abstände der Permanentmagnete in Bewegungsrichtung wird beim Vorbeilaufen des Magnetträgers von jedem der feststehend angeordneten Hallelementpaare I, II bzw. III, IV ein halbperiodisches Signal abgegeben. Gleiche Magnetpolabstände würden zu periodischen Signalen führen.

Die beiden von den Hallelementpaaren I, II bzw. III, IV abgegebenen, analogen Signale müssen verstärkt werden, um weiter verarbeitet werden zu können. Vorzugsweise erfolgt diese Verstärkung einkanalig, um die Temperaturabhängigkeit der OffsetSpannung und des Verstärkungsfaktors des verwendeten Verstärkers 3, zu eliminieren. Zu diesem Zweck werden die beiden von den Hallelementpaaren I, II bzw. III, IV abgegebenen Signale einem Multiplexer 2 zugeführt, der sie alternierend an den Eingang des Verstärkers 3 legt. Die Vorteile einer solchen Einkanaligen Signalverarbeitung sind ausführlich in der DE 42 24 225 A1 dargestellt.

Um im Messbetrieb die nachfolgende Auswertung mit Hilfe einer digital arbeitenden Rechenschaltung 10 durchführen zu können, ist der Ausgang des Verstärkers 3 mit dem Eingang eines Analog/Digital-Wandlers 4 verbunden, der die ihm alternierend zugeführten, verstärkten analogen Signale digitalisiert. Sein Ausgang ist mit einem Demultiplexer 5 verbunden, der synchron mit dem Multiplexer 2 arbeitet und so die Zweikanaligkeit wieder herstellt.

Die bisher beschriebene Sensoranordnung 1 und die Schaltungsteile 2 bis 5 bilden gemeinsam eine Sensoreinheit 7, deren Ausgangssignale a(z(t)) und b(z(t) von den beiden Ausgängen des Multiplexers 2 geliefert werden.

Da sowohl die Eicheinheit 31 im Eichbetrieb als auch die Rechenschaltung 10 im Messbetrieb die Ausgangssignale a(z(t)) und b(z(t)) der Sensoreinheit 7 für die weitere Verarbeitung gleichzeitig und - abgesehen von Schleppfehleranteilen - in Echtzeit benötigen, ist jedem der beiden Ausgänge des Demultiplexers 5 ein Zwischenspeicher (ZS) 6 nachgeschaltet, der von dem zugehörigen digitalen Ausgangssignal a(z(t)) bzw. b(z(t)) den momentanen Amplituden-

wert $\Delta a(z)$ bzw. $\Delta b(z)$ abgreift und so lange speichert, bis der jeweils andere zum gleichen Fein-Positionswert z gehörende digitale Amplitudenwert ebenfalls zur Verfügung steht.

Diese Verarbeitungsschritte können mit so hoher Geschwindigkeit durchgeführt werden, dass die durch sie entstehende Zeitverzögerung des einen der beiden Ausgangssignale a(z(t)) und b(z(t)) gegenüber dem anderen auch bei einer sehr schnellen Bewegung des zu überwachenden Körpers praktisch keine Rolle spielt und die nach der einkanaligen Vorverarbeitung abgegriffenen Amplitudenwerte $\Delta a(z)$ und $\Delta b(z)$ als "gleichzeitig" erfasst betrachtet und daher ein und demselben Feinpositionswert z zugeordnet werden können. Andererseits kann durch die Zwischenspeicherung die Gleichzeitigkeit hergestellt werden.

Prinzipiell würde es genügen, in nur einem der beiden Ausgangskanäle des Demultiplexers 5 einen Zwischenspeicher vorzusehen, doch wird aus Gründen der Gleichbehandlung der beiden Signale der Einsatz von zwei Zwischenspeichern 6 bevorzugt. Damit kann parallel zur Auswertung bereits eine neue Analog/Digital-Wandlung gestartet werden.

Für den Fall, dass die Sensoranordnung 1 Sensoren umfasst, die Signale mit so großer Amplitude liefern, dass keine Verstärkung erforderlich ist, können der Multiplexer 3, der Verstärker 3, der Demultiplexer 5 und die beiden Zwischenspeicher 6 weggelassen werden. Die zweikanalige Sensoreinheit 7 umfasst dann nur noch zwei Analog/DigitalWandler, denen jeweils eines der Sensorsignale zugeführt wird und deren Ausgänge unmittelbar die Ausgangssignale a(z(t)) und b(z(t)) der Sensoreinheit liefern.

Prinzipiell ist der jeweilige wahre Feinpositionswert z durch die Amplitudenwerte $\Delta a(z)$. und $\Delta b(z)$ exakt bestimmt. Da aber insbesondere bei Verwendung von kostengünstigen Sensoren jedes der Ausgangssignale a(z(t)) und b(z(t) stärker verrauscht sein kann, als. dies für die gewünschte Messgenauigkeit akzeptabel ist, werden den beiden Eingängen 11, 12 der Rechenschaltung 10 die abgegriffenen Amplituden $\Delta a(z)$ und $\Delta b(z)$ dieser Signale a(z(t)) und b(z(t)) vorzugsweise nicht als Einzel-Messwerte sondern in Form von zuvor in den Mittelwertbildungsschaltungen (MW) 8 gebildeten Mittelwerten A(z) und B(z) zugeführt.

Um eine hohe Dynamik und, zumindest dann, wenn sich der zu überwachende Körper nicht extrem schnell bewegt, eine hohe Genauigkeit zu erzielen, ist erfindungsgemäß vorgesehen, jeden neuen Mittelwert $A(z)_{neu}$ bzw. $B(z)_{neu}$ aus dem vorausgehend gewonnenen Mittelwert $A(z)_{alt}$ bzw. $B(z)_{alt}$ und dem neuesten- Einzel-Amplitudenwert- $\Delta a(z)$ bzw. $\Delta b(z)$ dadurch zu bilden, dass sowohl der alte Mittelwert $\Delta(z)_{alt}$ bzw. $B(z)_{alt}$ als auch der neueste Einzel-Amplitudenwert $\Delta a(z)$ bzw. $\Delta b(z)$ vor ihrer Summation jeweils mit einem Gewichtungsfaktor $gf_1$ bzw. $gf_2$ multipliziert und dann die so erhaltene Summe durch die Summe der Gewichtungsfaktoren dividiert wird, wie dies in der folgenden Gleichung für die Mittelwerte A(z) dargestellt ist:

$$A(z)_{neu} = \frac{gf_1 A(z)_{alt} + gf_2 \Delta a(z)}{gf_1 + gf_2}$$

Entsprechendes gilt auch für die Bildung der Mittelwerte $B(z)_{neu}$

Vorzugsweise werden dynamische Gewichtungsfaktoren $gf_1$ und. $gf_2$ in der Weise verwendet, dass der zum alten Mittelwert $A(z)_{alt}$ bzw. $B(z)_{alt}$ gehörende Gewichtungsfaktor $gf_1$ um so kleiner und der zum neuesten Einzel-Amplitudenwert $\Delta a(z)$ bzw. $\Delta b(z)$ gehörende Gewichtungsfaktor. $gf_2$ umso größer gewählt wird, je größer die Differenz zwischen dem alten Mittelwert $A(z)_{alt}$ bzw. $B(z)_{alt}$ und dem neuesten Einzel- Amplitudenwert $\Delta a(z)$ bzw. $\Delta b(z)$ ist, wobei die Summe der Gewichtungsfaktoren $gf_1 + gf_2$ vorzugsweise konstant gehalten wird.

Die Zwischenspeicher 6 sowie die ihnen nachgeschalteten Mittelwertbildungsschaltungen 8 können mit der Rechenschaltung 10 und der Eicheinheit 31 zu einer einzigen Recheneinheit, z.B. einem $\mu$-Controller zusammengefasst werden. Sie sind hier jedoch der Deutlichkeit halber als gesonderte Schaltungen wiedergegeben.

Im Eichbetrieb werden die Mittelwert-Paare $A_E(z)$, $B_E(z)$ der Eicheinheit 31 zugeführt, die wegen der definierten Kopplung zwischen Erregereinheit und Eichnormal 30 von letzterem den jeweils zu jedem dieser Paare gehörenden Eich-Feinpositionswert $\mu(z)$ erhält, unter dessen Verwendung sie diese in zusammengehörende, aus echten Referenzwerten $A_E(\mu)$ und $B_E(\mu)$ sowie dem zugehörigen wahren Feinpositionswert $\mu((A_E, B_E)$ bestehende Werte-Triplets überführt und diese unter Beibehaltung ihrer Korrelation im Vergleichwertspeicher 14 ablegt. Eine weniger bevorzugte Alternative besteht darin, dass die Quotienten $A_E(\mu)/B_E(\mu)$ gebildet und unter Beibehaltung der Korrelation zusammen mit $\mu(A_E, B_E)$ in einem Vergleichswertspeicher abgelegt werden. In jedem Fall werden die Eichschritte für eine Vielzahl von Feinpositionswerten z wiederholt, die den gesamten Bewegungsbereich des Körpers vorzugsweise gleichmäßig überdecken.

Um im Messbetrieb einen interessierenden momentanen Feinpositionswert z zu ermitteln vergleicht die Rechenschaltung 10 die jeweiligen Mittelwerte $A_M(z)$, $B_M(z)$, mit den echten Referenzwerten $A_E(\mu(z))$ und $B_E(\mu(z))$ der im Vergleichswertspeicher 14 abgelegten Werte-Triplets $A_E(\mu(z))$, $B_E(\mu(z))$ anhand der Rechenoperation

$$\delta(t) = A_M(z)\, B_E(\mu(z)) - B_M(z)\, A_E(\mu(z))$$

vorzugsweise in einer Regelschleife, in der zusammengehörige $A_E(\mu(z))$ und $B_E(\mu(z))$ über $\mu$ so variiert werden, dass ö(t) gegen Null geht.

Zu diesem Zweck wird das Ausgangssignal ö(t) der Rechenschaltung 10 einer Rückkopplungsschaltung 15 zugeführt, die das Argument $\varphi(t)$ bildet, das dem Vergleichswertspeicher 14 als Eingangssignal zugeführt wird. Die Rückkopplungsschaltung 15 überprüft, ob ö(t) größer, kleiner oder gleich 0 ist und verändert unter Berücksichtigung des Vorzeichens von ö(t) den Wert von $\varphi(t)$ um einzelne oder um mehrere Inkremente so lange, bis die Bedingung $\delta(t) = 0$ zumindest mit ausreichender Genauigkeit erfüllt ist, wie dies oben bereits geschildert wurde.

Sobald die Bedingung ö(t) = 0 durch eine geeignete, von der Rückkoppelschaltung 15 vorgenommene Veränderung von $\varphi(t)$ erreicht worden ist, wird der zu dem betreffenden Referenzwertepaar $A_E(\mu)$ und $B_E(\mu)$ gehörende, im Vergleichwertspeicher 14 abgelegte wahre Feinpositionswert $\mu(A_E, B_E)$ bei starrer Kopplung von Erregereinheit und Eichnormal gleich dem gesuchten Feinpositionswert z gesetzt ($\varphi = \mu = z$) und $\varphi$ an eine zum Verwender der Positionswerte führenden Schnittstelle 16 abgegeben, an der somit die echten Werte des Eichnormals erscheinen.

Die Schnittstelle 16 erhält von der Rückkoppelungsschaltung 15 über die Leitungen 17 und 18 das zur Veränderung des Eingangswertes $\varphi(t)$ des Vergleichswertspeichers 14 dienende Inkrementalsignal und das Vorzeichen des Ausgangswertes $\delta(t)$ der Rechenschaltung 10 woraus unmittelbar Informationen über die Richtung und die Geschwindigkeit der Bewegung des zu überwachenden Körpers erhalten werden können.

Alternativ ist es möglich, eine Vielzahl von Divisionsoperationen gemäß der Beziehung

$$A_M(z)/B_M(z) \quad <> \quad A_E(\mu)/B_E(\mu)$$

durchzuführen und dabei $\mu$ so lange zu variieren, bis aus dieser Ungleichung eine Gleichung wird. Dies ist im Allgemeinen aber mathematisch problematisch (z.B. muss eine Division durch 0 vermieden werden) und wesentlich zeitaufwendiger.

Weiterhin ist in den Fig.1 bis 9 eine Amplitudenauswertungsschaltung 21 dargestellt, welcher als Eingangssignale am Besten die an den Ausgängen der Mittelwertbildungsschaltungen 8 erscheinenden einzelnen Signalamplituden zugeführt werden. Stattdessen könnten die Eingangssignale der Amplitudenauswertungsschaltung 21 auch hinter den Zwischenspeichern 6 oder hinter dem Demultiplexer 5 abgegriffen werden.

Für eine Messung der Feinpositionswerte z insbesondere mit hoher Genauigkeit ist es erfindungsgemäß nicht erforderlich, dass die Ausgangssignale a(z(t)) und b(z(t)) der Sensoreinheit 7 sinus- bzw. kosinusförmig sind.

Da aber für die im Folgenden beschriebene Steuerung der Spannungsversorgung der Sensoren 1 keine besonders hohe-Genauigkeit, erforderlich ist, kann man für diesen Zweck annehmen, dass diese Ausgangssignale a(z(t)) und b(z(t)) ungefähr den Formeln

$$a(z(t)) = \hat{A}_{mp} \sin z(t)$$

und

$$b(z(t) = \hat{A}_{mp} \cos z(t)$$

genügen, wobei $\hat{A}_{mp}$ der Scheitelwert-dieser Signale ist. Dann kann in erster Näherung nach der Gleichung

$$\hat{A}_{mp}^{2} (\sin^2 z(t) + \cos^2 z(t)) = \hat{A}_{mp}^{2}$$

der Scheitelwert $\hat{A}_{mp}$ unabhängig vom momentanen Feinpositionswert z dadurch ermittett werden, dass die Amplitudenauswertungsschaltung 21 jedes der ihr zugeführten Eingangssignale quadriert und aus der Summe dieser Quadrate die Wurzel zieht.

Der so gewonnene Amplitudenwert wird einem spannungsgesteuerten Oszillator 22 zugeführt, der zwei Charge-Pumps 23, 24 ansteuert, welche den unteren bzw. den oberen Spannungspegel der Strom/Spannungsversorgung der Sensoren 1 so regeln, dass eine optimale Anpassung des Sensorsignal-Spannungsbereichs an den Eingangsspannungsbereich der nachfolgenden Schaltungsanordnung erzielt wird, bei der es sich vorzugsweise um einen IC-Baustein handelt, der alle Schaltungseinheiten 2 bis 10, 14 bis 16 und 20 bis 22 umfasst.

Alternativ hierzu können auch mit Hilfe von jeweils über ein definiertes Mess-Segment gebildeten Integralen der Amplitudenwerte eines der beiden Ausgangssignale Amplitudeninittelwerte erfasst und dem spannungsgesteuerten Oszillator 22 zugeführt werden.

Charge-Pumps sind dem Fachmann bekannt. Es handelt sich bei ihnen um eine Art Gleichspannungs/Gleichspannungs-Wandler, bei denen Kondensatoren als Energiespeicher verwendet werden, um aus einer Eingangsspannung entweder eine höhere oder eine niedrigere Ausgangsspannung zu erzeugen. Diese können aus einfachen und kostengünstigen Bauteilen aufgebaut werden.

Charge-Pumps verwenden elektronische Schalter, welche die Ladungszufuhr zu und die Ladungsentnahme aus Kondensatoren kontrollieren und die bei der vorliegenden Anordnung durch den spannungsgesteuerten Oszillator in der erforderlichen Weise betätigt werden.

In Figur 3, bei der die linke Ordinate für Amplitudenwerte und die rechte für Eich-Feinpositionswerte $\mu$ steht, sind über den aus der Abszisse aufgetragenen Feinpositionswerten z eines erfindungsgemäßen Positionsgebers die möglichen Kurvenverläufe von zwei durch das erfindungsgemäße Verfahren ohne weiteres verarbeitbaren Ausgangssignalen a(z) und b(z) über zwei Mess-Segmente MS1 und MS2 im Eichbetrieb dargestellt. Zur vereinfachten Darstellung werden hier idealisierte, nämlich rauschfreie Ausgangssignale a(z) und b(z) betrachtet, für welche die (in der Praxis unumgängliche) Mittelwertbildung nicht erforderlich ist.

Anfang und Ende eines jeden Mess-Segmentes sind durch die Nulldurchgänge einer der beiden Kurven, hier der Kurve a(z) definiert, gegen welche die Nulldurchgänge der Kurve b(z) eine Phasenverschiebung aufweisen. Aus diesem Grund werden die beiden Kurven auch als "halbperiodisch" bezeichnet. Die Phasenverschiebung zwischen den Nulldurchgängen der beiden Kurven ist, eine mechanisch stabile Sensoranordnung vorausgesetzt, über den gesamten Arbeitsbereich hinweg die gleiche.

Wie man sieht, ist das Mess-Segment MS1 deutlich länger als das Mess-Segment MS2 und die beiden Kurvenverläufe a(z) und b(z) besitzen stark unterschiedliche Formen. Allerdings schneiden sie sich in jedem der beiden Mess-Segmente nur einmal, so dass hier der bereits erwähnte "einfach Fall" gegeben ist. Der sich an das rechte Mess-Segment anschließende weitere Verlauf der beiden Kurven kann von dem in den MessSegmenten MS 1 und MS2 verschieden sein.

Der Eich-Feinpositionswert $\mu$ ist bevorzugt exakt proportional zu z, kann also durch eine sich über die beiden Mess-Segmente MS1 und MS2 erstreckende, mit der Steigung 1/m ansteigende Gerade dargestellt werden, die beim Übergang des Mess-Segmentes MS2 zum nächsten Mess-Segment wieder auf den Null-Wert zurückspringt, um von dort über die beiden folgenden Mess-Segmente in der gleichen Weise wieder linear anzusteigen, wie dies für die beiden Mess-Segmente MS1 und MS2 gezeigt ist.

Im rechten Mess-Segment MS2 ist ein Mess-Zeitpunkt $t_v$ dargestellt, in welchem die Amplitudenwerte $\Delta$a(z) und $\Delta$b(z) für die oben geschilderte weitere Verarbeitung abgegriffen werden, zu denen der Eich-Feinpositionswert $\mu$(a, b) gehört, der ihnen während der Eichung zugeordnet und abgespeichert wurde, so dass er dann, wenn diese beiden Amplitudenwerte $\Delta$a(z) und $\Delta$b(z) im Messbetrieb anfallen, als Messwert für die Feinposition des Körpers ausgegeben werden kann.

Bei dem unter Bezugnahme auf die Figuren 1 bis 3 beschriebenen Ausführungsbeispiel wurde davon ausgegangen, dass die Sensoranordnung 1 vier Hallelemente I, II, III, IV umfasst, die so im Magnetfeld der Erregereinheit angeordnet sind, dass die Hallelemente eines jeden Paares zu vermessende Magnetfelder entgegengesetzter Richtung sehen (antiserielle Schaltung), sodass jedes Paar ein Signal liefert, aus dem additiv überlagerte Störfeldanteile eliminiert sind.

Die hierdurch erreichbare Genauigkeit ist aber aus zwei Gründen eine in manchen Fällen nicht ausreichend:

Zum einen besteht bei gewissen Feldkonfigurationen die Gefahr dass die beiden hardwaremäßig, d.h. unveränderbar fest miteinander verschalteten Hallelemente eines jeden Paares nicht von exakt gleichen Feldanteilen durchsetzt werden, wodurch das Messergebnis verfälscht werden kann.

Zum anderen ist es aus Kostengründen bevorzugt, die Hallelamente auf der Oberseite eines integrierten Schaltungschips auszubilden, auf dem wesentliche Teile der Signalverarbeitungs- und Auswertungselektronik untergebracht sind. Piezoeffekte und unterschiedliche Kristallstrukturen verursachen dann an den Hallelementen Stresseffekte die zu einem Offset der-Hallelemente führt, sodass deren Ausgangssignale auch dann unterschiedliche Amplitudenwerte aufweisen, wenn sie von gleichen Magnetfeldstärken durchsetzt werden; der dadurch auftretende Fehler wird hier als "elektrischer Messfehler" bezeichnet.

Um die zuletzt genannte Problematik zu beheben, ist es vorteilhaft, in sehr schneller Folge von jedem der Hallelemente I, II, III, IV vier Einzelsignale in der Weise zu gewinnen, dass zyklisch seine Signal-Abgriffsanschlüsse mit den Stromversorgungsanschlüssen und in jeder dieser Konfigurationen die Plus- und Minuspole der letzteren miteinander vertauscht werden. Jeder der dadurch in schneller Folge entstehenden analogen Einzelsignal-Spannungswerte wird verstärkt und in einer Sample-and-Hold-Schaltung so lange zwischengespeichert, bis alle vier Einzelsignal-Spannungswerte eines Vertauschungszyklus vorliegen, die vorzeichenrichtig so zu einem von dem betreffenden Hallelement I oder II oder III oder IV abgegebenen Signal summiert werden, dass die durch das Hallelement selbst bedingten Störanteile herausfallen. Verwendet man jedoch für die Verstärkung und Zwischenspeicherung eines jeden der vier Einzelsignäle einen eigenen Verarbeitungskanal mit Verstärker, wie dies bisher üblich ist, so können durch unterschiedliche Offsetspannungen und Temperaturdrifterscheinungen der vier zu jedem einzelnen Hallelement I, II, III, IV gehörenden Verarbeitungskanäle neue, oft größere, nicht eliminierbare Fehler entstehen.

Um hochgenau arbeiten zu können, ist daher erfindungsgemäß vorgesehen, keine festen Verdrahtungen der vier verwendeten Hallelemente I, II, III, IV vorzusehen, sondern aus den sechzehn unmittelbar an ihnen abgegriffenen Einzelsignal-Amplitudenwerte durch eine einkanalige Vorverarbeitung eine entsprechende Anzahl von digitalen Ausgangssignalen $^{I}a(z(t))$, $^{I}b(z(t))$,..., $^{IV}p(z(t))$ der Sensoreinheit 7 abzuleiten, wie dies bei den Ausführungsbeispielen der Figuren 4 bis 9 der Fall ist. Die den Signalbezeichnungen vorangestellten, hochgesetzten römischen Ziffern I bis IV weisen dabei darauf hin, von welchem der vier Hallelemente I, II, III, IV das betreffende Signal stammt.

Wie man diesen Figuren entnimmt, werden jeweils dem Multiplexer 2 nicht nur zwei sondern 16 Hallsondensignale zugeführt, der sie zyklisch durchlaufend an den Verstärker 3 anlegt, dessen Ausgang der Analog/Digitalwandler 4 nachgeschaltet ist. Die durch diese Schaltungsteile aufgeprägten multiplikativen Störungen gehen in alle sechzehn Signale in gleicher Weise ein und können daher durch eine spätere Quotientenbildung eliminiert werden.

Der Demultiplexer 5 legt die so einkanalig von den Hallsondensignalen abgeleiteten Signale als Ausgangssignale $^{I}a(z(t))$, $^{I}b(z(t))$,..., $^{IV}p(z(t))$ der Sensoreinheit 7 auf sechzehn zueinander parallele Ausgangsleitungen, von denen jede zu einem Zwischenspeicher 6 führt, der in getakteter Weise von dem ihm zugeführten Ausgangssignal der Sensoreinheit 7 einen momentanen Amplitudenwert abgreift und so lange zwischenspeichert bis alle zu einem einzigen Feinpositionswert z gehörenden sechzehn digitalen Aüsgarigssignal-Amplitudenwerte $\Delta^{I}a(z)$, $\Delta^{I}b(z)$,..., $\Delta^{IV}p(z)$ gleichzeitig für eine weitere Verarbeitung zur Verfügung stehen.

Diese kann dann in unterschiedlicher Weise erfolgen:

Bei dem in den Figuren 4 und 5 gezeigten Beispiel wird gleichzeitig von jedem der sechzehn Amplitudenwerte $\Delta^{I}a(z)$, $\Delta^{1}b(z)$,..., $\Delta^{IV}p(z)$ in einer eigenen Mittelwertbildungsschaltung (MW) 8 ein Mittelwert $^{I}A(z)$, $^{I}B(z)$,..., $^{IV}P(z)$ in der gleichen Weise gebildet, wie dies bereits im Zusammenhang mit den Figuren 1 und 2 beschrieben wurde.

Diese Mittelwerte $^{I}A(z)$, $^{I}B(z)$,..., $^{IV}P(z)$ werden dann unverknüpft, das heißt parallel im Eichbetrieb (Fig. 4) der Eicheinheit 31 und im Messbetrieb (Fig. 5) der Recheneinheit 10 zugeführt, wo sie in entsprechender Weise verarbeitet bzw. ausgewertet werden, wiedies in Verbindung mit dem Ausführungsbeispiel der Fig. 1 und 2 für nur zwei derartige Mittelwerte A(z) und B(z) beschrieben wurde. Die Kreuzproduktdifferenzen werden hier jeweils aus sechzehn Referenzwerten $^{I}A_E(\mu)$, $^{I}B_E(\mu)$,..., $^{IV}P_E(\mu)$ und sechzehn Messwerten $^{I}A_M(z)$, $^{I}B_M(z)$,... $^{I}P_M(z)$ gebildet und so lange variiert, bis sie sich dem Wert Null zumindest mit hinreichender Genauigkeit abgenähert haben. Ist dieser Zustand erreicht, wird der zur betreffenden Referenzwertgruppe gehörende, im Vergleichswertspeicher 14 niedergelegte wahre Feinpositionswert $\mu(A_E, B_E,...,P_E)$ als aktuelles Argument $\varphi$ erkannt ($\varphi = \mu$) und als aktueller Feinpositionswert $z = m\ \mu$ ermittelt und ausgegeben.

Auch bei dem Ausführungsbeispiel der Fig. 6 und 7 wird von jedem der sechzehn Amplitudenwerte $\Delta^{I}a(z)$, $\Delta^{I}b(z)$,..., $\Delta^{IV}p(z)$ dann, wenn alle für eine gleichzeitige Verarbeitung zu Verfügung stehen, aus schnell aufeinander folgenden $\Delta^{I}a_1(z)$ bis $\Delta^{I}a_x(z)$, $\Delta^{I}b_1(z)$ bis $\Delta^{I}b_x(z)$ usw. bis $\Delta^{IV}p_1(z)$ bis $\Delta^{IV}p_x(z)$ jeweils ein entsprechender Mittelwert $^{I}A(z)$, $^{I}B(z)$,..., $^{IV}P(z)$ gebildet. Diese Mittelwerte werden hier jedoch einer Vorverarbeitungs-Rechenschaltung 9 zugeführt, in der die von jeweils einem Hallelement I, II, III, IV stammenden Mittelwerte so zu einem einzigen Ausgangs-Mittelwert Q(z) bzw. R(z) bzw. S(z) bzw. T(z) verknüpft werden, dass die elektrischen Offset-Fehler der Hallelemente eliminiert werden. Der wesentliche Unterschied zu der in Verbindung mit den Fig.1 und 2 geschilderten Verknüpfung von getrennt verstärkten und zwischengespeicherten analogen Hallelement-Signalen besteht darin, dass die Verstärkung und Digitalisierung in einem einzigen, allen sechzehn Signalen gemeinsamen Verarbeitungskanal stattfindet, sodass die durch diesen Kanal bewirkten Fehler allen Signalen in gleicher Weise aufgeprägt und nach der Digitalisierung unveränderlich sind, so dass sie bei entsprechender Verarbeitung durch Differenzbildung eliminiert werden können.

Diese werden so wie bei den bereits erläuterten Varianten im Eichbetrieb (Fig. 6) der Eicheinheit 31 und im Messbetrieb (Fig. 7) der Recheneinheit 10 zugeführt, wo sie in entsprechender Weise verarbeitet bzw. ausgewertet werden. Die Kreuzproduktdifferenzen werden hier jeweils aus vier zusammengehörenden Referenzwerten $Q_E(\mu)$, $R_E(\mu)$, $S_E(\mu)$ und $T_E(\mu)$ und vier zusammengehörenden Messwerten $Q_M(z)$, $R_M(z)$, $S_M(\mu)$ und $T_M(z)$ gebildet und so lange variiert, bis sie sich dem Wert Null zumindest mit hinreichender Genauigkeit abgenähert haben. Ist dieser Zustand erreicht, wird der zur betreffenden Referenzwertgruppe gehörende, im Vergleichswertspeicher 14 niedergelegte wahre Feinpositionswert $\mu(Q_E, R_E, S_E, T_E)$ als aktuelles Argument $\varphi$ erkannt ($\varphi = \mu$) und als aktueller Feinpositionswert $z = m\ \mu$ ermittelt und ausgegeben.

Dies kann beispielsweise nach einer von drei möglichen Formeln erfolgen, von denen hier zwei angegeben sind:

$$[Q_E(\mu(z)) - R_E(\mu(z))][S_M(z) - T_M(z)] - [Q_M(z) - R_M(z)][S_E(\mu(z)) - T_E(\mu(z))]$$

oder

$$[Q_E(\mu(z)) - T_E(\mu(z))][S_M(z) - R_M(z)] - [Q_M(z) - RT_M(z)][S_E(\mu(z)) - R_E(\mu(z))]$$

Die dritte ergibt sich durch eine weitere Permutation der Signale Q, R, S und T.

Entsprechendes gilt auch für das Ausführungsbeispiel der Fig. 8 und 9, das sich von dem der Fig. 6 und 7 auch dadurch unterscheidet, dass hier die Mittelwertbildung nicht für die Eingangs- sondern die Ausgangssignale der Vorverarbeitungs-Rechenschaltung 9 erfolgt. Der wesentliche Unterschied liegt hier jedoch darin, dass sowohl die elektrischen Messfehler als auch Fehler durch Fremdfeldstörungen bereits in der Vorverarbeitung eliminiert werden, und somit ein einfacher Endverarbeitungsprozess erzielt wird.

Einzelne Verarbeitungsschritte der unter Bezugnahme auf die Zeichnungen 1,2 und 4 bis 9 beschriebenen Verfahren können erfindungsgemäß in verschiedensten, geeigneten Variationen miteinander kombiniert werden.

In den bisher geschilderten Ausführungsbeispielen wurden Sensoranordnungen 1 mit jeweils vier Hallelementen I, II, III, IV beschrieben. Das erfindungsgemäße Verfahren kann aber auch mit nur drei Hallelementen durchgeführt werden, die dann z.B. zwölf zu verarbeitende Signale liefern. Zur Bildung der Kreuzprodukte können wechselnde Paarbildungen erfolgen. Die allgemeine Form eines Kreuzproduktes ist dadurch gegeben, dass eine Multiplikation von einem oder mehrere Elementen der Referenzwertgruppe mit einem oder mehrere Elementen der Messwertgruppe erfolgt.

In der hier generell durchgeführten Signalverarbeitung mit Hilfe von Vorverarbeitung und/oder Kreuzprodukten ist der Grundgedanke enthalten, dass durch die ratiometrische Verarbeitung von Differenzgrößen, wie sie in der bereits erwähnten DE 42 24 225 A1 beschrieben ist, alle Störgrößen eliminiert werden können.

Das allgemein gehaltene, d.h. nicht auf eine bestimmte Anzahl von Ausgangssignalen der Sensoreinheit 7 festgelegte Flussdiagramm der Fig. 10 zeigt die wesentlichsten Schritte des Eichbetriebs.

Nach dem START 40 durchläuft die mit dem Eichnormal 30 beispielsweise starr mechanisch gekoppelte Erregereinheit des erfindungsgemäßen Positionsgebers über ihren Bewegungsbereich hinweg eine Vielzahl von jeweils durch einen Feinpositionswert z gekennzeichneten Positionen, zu jeder von denen die Sensoreinheit 7 im Schritt 41 eine Gruppe von zugehörigen Ausgangssignalen $a_E(z(t))$, $b_E(z(t))$,.. liefert, die je nach Ausführungsform z.B. zwei, drei, vier, zwölf oder sechzehn Signale umfassen kann.

Im Schritt 42 werden von jedem der Ausgangssignale $a_E(z(t))$, $b_E(z(t))$,...nacheinander **x** Amplitudenwerte $\Delta a_{E1}(z)$,..., $\Delta a_{Ex}(z)$, $\Delta b_{E1}(z)$,.... $\Delta b_{Ex}(z)$,....abgegriffen aus denen dann im Schritt 43 gleichzeitig für jedes der Ausgangssignale $a_E(z(t))$, $b_E(z(t))$,....ein Mittelwert $A_E(z)$, $B_E(z)$,.... gebildet wird. Dabei muss **x** zumindest in der Anlaufphase größer als 1 sein, weil es im weiteren Verlauf im Allgemeinen genügt, jeden neuen Mittelwert $A_E(z)_{neu}$, $B_E(z)_{neu}$... aus dem vorausgehend gewonnenen Mittelwert $A_E(z)_{alt}$, $B_E(z)_{alt}$ ...und einem einzigen neuen Einzel-Amplitudenwert $\Delta a_E(z)$, $\Delta b_E(z)$...dadurch zu bilden, dass sowohl der alte Mittelwert $A_E(z)_{alt}$, $B_E(z)_{alt}$,... als auch der neueste Einzel-Amplitudenwert $\Delta a_E(z)$, $\Delta b_E(z)$ vor ihrer Summation jeweils mit einem Gewichtungsfaktor gf, bzw. $gf_2$ multipliziert und dann die so erhaltene Summe durch die Summe der Gewichtungsfaktoren dividiert wird, x also gleich 1 sein kann.

Parallel den eben beschriebenen Vorgängen liefert das Eichnormal 30 im Schritt 44 den dem betreffenden Feinpositionswert z(t) entsprechenden Eich-Feinpositionswert $\mu(z)$ an die Eicheinheit 31, die auch die im Schritt 43 gebildeten Mittelwerte $A_E(z)$, $B_E(z)$,....erhält und diese im Schritt 45 unter Verwendung dieses Eich-Feinpositionswertes $\mu(z)$ in echte Referenzwerte $A_E(\mu(z))$, $B_E(\mu(z))$.....überführt und dem Eich-Feinpositionswert $\mu(z)$ zuordnet.

Im Schritt 46 werden die echten Referenzwerte $A_E(\mu(z))$, $B_E(\mu(z))$,....zusammen mit dem zugehörigen Eich-Feinpositionswert $\mu(A_E, B_E,...)$ als Werte-Multiplett im Vergteichwertspeicher 14 abgelegt.

Im Schritt 47 wird abgefragt, ob der gesamte Bewegungsbereich überdeckt worden ist. Wenn "ja" wird der Eichbetrieb beendet (Block 48), ansonsten kehrt das Verfahren zum Schritt 41 zurück, um die zum nächsten Feinpositionswert z(t) gehörende, von der Sensoreinheit 7 gelieferte Gruppe von Ausgangssignalen $a_E(z(t))$, $b_E(z(t))$,...in der eben beschriebenen Weise zu verarbeiten, sodass im Vergleichwertspeicher nach und nach eine "Bibliothek" von abgelegten Werte-Multipletts entsteht, die den gesamten Bewegungsbereich des zu überwachenden Körpers in etwa gleichmäßig abdecken.

Bei dem in Fig. 11 dargestellten Flussdiagramm verlaufen die Schritte 51 bis 53 völlig anlog zu den Schritten 41 bis 43 des Eichbetriebes, nur dass hier die zu verarbeitenden Signale den Indexbuchstaben M tragen, um deutlich zur machen, dass nurmehr der Messbetrieb durchgeführt wird.

Nach dem Schritt 53 werden die Mittelwerte $A_M(z)$, $B_M(z)$,....allerdings nicht der Eieheinheit 31 sondern der Recheneinheit 10 zugeführt, die gleichzeitig hierzu einen erste Gruppe von Referenzwerten $A_E(\mu(z))$, $B_E(\mu(z))$,...aus dem Vergleichswertspeicher 14 erhält (Schritt 54).

Im Schritt 55 vergleicht die Recheneinheit 10 anhand von vorgegebenen mathematischen Operationen, insbesondere durch die Bildung von Kreuzprodukten die anliegenden Mittelwerte $A_M(z)$, $B_M(z)$,....mit den vom Vergleichswertspeicher 14 gelieferten Referenzwerten $A_E(\mu(z))$, $B_E(\mu(z))$,..... Ist ein vorgegebenes Übereinstimmungskriterium erfüllt (Antwort "ja" zum Schritt 56), beispielsweise dass das Kreuzprodukt aus Mittelwerten $A_M(z)$, $B_M(z)$,....und Referenzwerten $A_E(\mu(z))$, $B_E(\mu(z))$,....gleich oder nahezu gleich Null ist, so wird der aktuelle Feinpositionswert $z(A_M(z)$, $B_M(z)$,....) nach der Gleichung $z = m\mu$ aus dem zu dem Werte-Multiplett der momentan anliegenden Gruppe von Referenzwerten $A_E(\mu(z))$, $B_E(\mu(z))$,....gehörenden Eich-Feinpositionswert $\mu(A_E$, $B_E$,...) berechnet und an den Verwender abgegeben. Dann kehrt das Verfahren zum Schritt 51 zurück und übernimmt von der Sensoreinheit 7 erneut eine Gruppe von Ausgangssignalen $a_M(z(t))$, $b_M(z(t))$,..., die zum gleichen Feinpositionswert $z(t)$ gehören können, wenn sich der Körper nicht bewegt, oder zu einem eine neue Position beschreibenden neuen Feinpositionswert $z(t)$.

Liefert das Kriterium 56 die Antwort "nein", so geht das Verfahren zurück zum Schritt 54, das heißt, der Vergleichswertspeicher liefert das nächste Werte-Multiplett an die Recheneinheit 10, die einen erneuten Vergleich mit den noch immer anliegenden Mess- bzw. Mittelwerten $A_M(z)$, $B_M(z)$,...durchführt.

Die Schleife 55, 56, 54 wird so lange durchlaufen, bis das Kriterium die Antwort "ja" liefert und das Verfahren, wie geschildert, einerseits im Schritt 57 den ermittelten Feinpositionswert $z = m\ \mu$ an den Verwender abgeben und andererseits zum Schritt 51 zurückkehren kann, um eine Neue Gruppe von Ausgangssignalen $a_M(z(t))$, $b_M(z(t))$,...der Sensoreinheit 7 zu übernehmen und aus ihnen in der beschriebenen Weise einen neuen Feinpositionswert z zu ermitteln.

Die in den Zeichnungen wiedergegebenen Positionen der Hallelemente I, II, III, IV sind nur schematisch zu verstehen. In der Praxis liegen die vier Hallelemente einer Sensoranordnung vorzugsweise auf den Ecken eine Quadrates. Bei einem Sensor mit drei Hallelementen können diese auf den Ecken eines Dreiecks oder auf einer Geraden angeordnet sein, wie dies in der nicht vorveröffentlichten deutschen Patentanmeldung 10 2010 050 356.8 beschrieben ist, deren technischer Inhalt durch Bezugnahme hier in vollem Umfang mit aufgenommen wird.

An Stelle der bisher hauptsächlich erwähnten Hallelemente können auch andere magnetosensitive Sensoren, insbesondere GMR-Sensoren (GMR = giant magnetic resistance) verwendet werden.

## Patentansprüche

1. Verfahren zur Ermittlung eines die momentane absolute Position eines bewegbaren Körpers beschreibenden Feinpositionswertes z mit Hilfe eines Positionsgebers, der eine feststehende Sensoreinheit (7) und eine sich mit dem Körper bewegende Erregereinheit umfasst, die einen vorgegebenen, aus wenigstens einem Mess-Segment bestehenden Bewegungsbereich durchlaufen kann, wobei die Sensoreinheit (7) mehrere Ausgangssignale abgibt, die gemeinsam einen Feinpositionswert z zumindest innerhalb eines Mess-Segments in reproduzierbarer Weise eindeutig beschreiben, und wobei im Messbetrieb in einer Recheneinheit (10) die Werte von aus den Ausgangssignalen abgeleiteten Signalen mit Referenzwerten verglichen werden, die in einem Vergleichswertspeicher (14) abgelegt sind,

   **dadurch gekennzeichnet,**

   **dass** in einem Eichbetrieb des Positionsgebers, in dem die Erregereinheit in einer definierten Beziehung zu einer Eicheinheit (31) steht und ihren Bewegungsbereich mindestens einmal durchläuft, von den Ausgangssignalen $a_E(z(t))$, $b_E(z(t))$,... der Sensoreinheit (7) nacheinander gleichzeitig Amplituden-Wertegruppen $\Delta a_E(z)$, $\Delta b_E(z)$,... abgegriffen werden, aus denen Gruppen von gesonderten Mittelwerten $A_E(z)$, $B_E(z)$,..., gebildet werden, welche jeweils den zugehörigen wahren Feinpositionswert z als Unbekannte implizit enthalten und der Eicheinheit (31) zugeführt werden, die diese unter Verwendung der ihr bekannten, mit den Feinpositionswerten $z(A_E$, $B_E$,...) definiert korrelierten Eich-Feinpositionswerte $\mu(z)$ in echte Referenzwerte $A_E(\mu(z))$, $B_E(\mu(z))$,... überführt und mit dem zugehörigen, bekannten Feinpositionswert $\mu(A_E$, $B_E$,...) jeweils als zusammengehörige Werte-Mukipletts im Vergleichswertspeicher (14) ablegt, und

   **dass** auch im Messbetrieb für jeden zu ermittelnden aktuellen Feinpositionswert z von den ihn identifizierenden Ausgangssignalen $a_M(z(t))$, $b_M(z(t))$,...der Sensoreinheit (7) nacheinander gleichzeitig Amplituden-Wertegruppen $\Delta a_m(z)$, $\Delta b_M(z)$,... abgegriffen und aus denen Gruppen von gesonderten Mittelwerten als Messwerte $A_M(z)$, $B_M(z)$,... gebildet werden, aus denen dann in der Recheneinheit (10) mit den im Vergleichswertspeicher (14) abgelegten echten Referenzwerten $A_E(\mu(z))$, $B_E(\mu(z))$,... und dem zugehörigen bekannten Feinpositionswert $\mu(A_E$, $B_E$,...) der aktuelle Feinpositionswert $z(A_M$, $B_M$,...) = $m\ \mu(A_E$, $B_E$,...) dadurch ermittelt wird, dass die Differenz der Kreuzprodukte aus den Referenzwerten einer Gruppe und den Messwerten einer Gruppe gegen Null geht.

2. Verfahren nach Anspruch 1, **dadurch gekennzeichnet, dass** der Sensoreinheit (7) im Eichbetrieb genau zwei in der Sensoreinheit (7) vorverarbeitete Ausgangssignale $u_E(z(t)$, $v_E(z(t)$ quasi gleichzeitig entnommen werden, von denen nacheinander mehrere (x) Amplitudenwertepaare $\Delta u_{E1}(z)$,..., $\Delta u_{Ex}(z)$, $\Delta v_{E1}(z)$,..., $\Delta v_{Ex}(z)$ abgegriffen und aus diesen gleichzeitig entsprechende Mittelwertpaare $U_E(z)$, $V_E(z)$ gebildet werden, die der Eicheinheit (31) unmittelbar als Referenzwertpaare zugeführt werden, die sie in Eichmittelwertpaare $U_E(\mu(z))$, $V_E(\mu(z))$ überführt, und dass der Sensoreinheit (7) im Messbetrieb genau zwei in der Sensoreinheit (7) vorverarbeitete Ausgangssignale $u_M(z(t))$, $v_M(z(t))$ quasi gleichzeitig entnommen werden, von denen nacheinander mehrere (x). Amplitudenwertepaare $\Delta u_{M1}(z),..., \Delta u_{Mx}(z)$, $\Delta v_{M1}(Z),..., \Delta v_{Mx}(Z)$ abgegriffen und gleichzeitig entsprechende Mittelwertpaare $U_M(z)$, $V_M(z)$ gebildet werden, die der Recheneinheit (10) als Messwertpaare zugeführt werden, und dass der aktuelle Feinpositionswert $z(U_M, V_M) = m\ \mu(U_E, V_E)$ dadurch ermittelt wird, dass die Differenz der Kreuzprodukte

$$U_M(z)\cdot V_E(\mu(z)) - V_M(z)\cdot U_E(\mu(z))$$

gegen Null geht. (Fig. 1 und Fig: 2)

3. Verfahren nach Anspruch 1, **dadurch gekennzeichnet, dass** der Sensoreinheit (7) im Eichbetrieb quasi gleichzeitig sechzehn Ausgangssignale entnommen werden, die vier Gruppen bilden, von denen jede vier vom gleichen Sensorelement (I, II, III, IV) stammende Ausgangssignale
$^{I}a_E(z(t))$, $^{I}b_E(z(t))$, $^{I}c_E(Z(t))$. $^{I}d_E(_Z(t))$,
$^{II}e_E(z(t))$, $^{II}f_E(z(t))$, $^{II}g_E(z(t))$, $^{II}h_E(z(t))$,
$^{III}i_E(_Z(t))$, $^{III}j_E(z(t))$, $^{III}k_E(z(t))$, $^{III}l_E(z(t))$,
$^{IV}m_E(z(t))$, $^{IV}n_E(z(t))$, $^{IV}o_E(z(t))$, $^{IV}p_E(z(t))$
umfasst, von denen gleichzeitig nacheinander mehrere (x) Amplitudenwertegruppen
$\Delta^{I}a_{E1}(z),...,\Delta^{I}a_{Ex}(z),................, \Delta^{I}d_{E1}(z),...,\Delta^{I}d_{Ex}(z)$.
$\Delta^{II}e_{E1}(z),...,\Delta^{II}e_{Ex}(z),..............., \Delta^{II}h_{E1}(z),...,\Delta^{II}h_{Ex}(z)$,
$\Delta^{III}i_{E1}(z)....,\Delta^{IIII}i_{Ex}(z),................., \Delta^{III}l_{E1}(z)....,\Delta^{III}l_{Ex}(z)$,
$\Delta^{IV}m_{E1}(z),...,\Delta^{IV}m_{Ex}(z),..............., \Delta^{IV}p_{E1}(z),...,\Delta^{IV}p_{Ex}(z)$
abgegriffen und aus diesen gleichzeitig entsprechende Mittelwertgruppen
$^{I}A_E(z)$, $^{I}B_E(z)$, $^{I}C_E(z)$, $^{I}D_E(z)$ bzw.
$^{II}E_E(z)$, $^{II}F_e(z)$, $^{II}G_E(z)$, $^{III}H_E(z)$ bzw.
$^{III}I_E(z)$, $^{III}J_E(z)$, $^{III}K_E(z)$, $^{III}L_E(z)$ bzw.
$^{IV}M_E(z)$, $^{IV}N_E(z)$, $^{IV}O_E(z)$, $^{IV}P_E(z)$
gebildet werden, von denen die von jeweils einem Sensorelement (I, II, III, IV) stammenden Mittelwerte in einer Vorverarbeitungs-Rechenschaltung (9) so miteinander verknüpft werden, dass vier von elektrischen Messfehlern befreite Mittelwerte $Q_E(z)$, $R_E(z)$, $S_E(z)$, $T_E(z)$ entstehen, die als Gruppe der Eicheinheit (31) zugeführt werden, welche sie in eine entsprechende Gruppe von vier Eichmittelwerten $Q_E(\mu(z))$, $R_E(\mu(z))$, $S_E(\mu(z))$, $T_E(\mu(z))$ überführt, dass der Sensoreinheit (7) im Messbetrieb quasi gleichzeitig sechzehn Ausgangssignale entnommen werden, die vier Gruppen bilden, von denen jede vier vom gleichen Sensorelement (I, II, III, IV) stammende Ausgangssignale
$^{I}a_M(z(t))$, $^{I}b_M(z(t))$, $^{I}c_M(z(t))$, $^{I}d_M(z(t))$,
$^{II}e_M(z(t))$, $^{II}f_M(z(t))$, $^{II}g_M(z(t))$, $^{II}h_M(z(t))$,
$^{III}i_M(z(t))$, $^{III}j_M(z(t))$, $^{III}k_M(z(t))$, $^{III}l_M(z(t))$,
$^{IV}m_M(z(t))$, $^{IV}n_M(z(t))$, $^{IV}o_M(z(t))$, $^{IV}p_M(z(t))$
umfasst, von denen gleichzeitig nacheinander mehrere (x) Amplitudenwertegruppen
$\Delta^{I}a_{M1}(z),...,\Delta^{I}a_{Mx}(z),................, \Delta^{I}d_{M1}(z),...,\Delta^{I}d_{Mx}(z)$.
$\Delta^{II}e_{M1}(z),...,\Delta^{II}e_{Mx}(z),..........., \Delta^{II}h_{M1}(z),..., {}^{II}h_{Mx}(z)$,
$\Delta^{III}i_{M1}(z),...,\Delta^{III}i_{Mx}(z),............, \Delta^{III}l_{M1}(z),...,\Delta^{III}lMx(z)$,
$\Delta^{IV}m_{M1}(z),..,\Delta^{IV}m_{Mx}(z),..........., \Delta^{IV}p_{M1}(z),..., \Delta^{IV}p_{Mx}(z)$
abgegriffen und aus diesen gleichzeitig entsprechende Mittelwertgruppen
$^{I}A_M(z)$, $^{I}B_M(z)$, $^{I}C_M(z)$, $^{I}D_M(z)$,
$^{II}M_M(z)$, $^{II}F_M(z)$, $^{II}G_M(z)$, $^{III}H_M(z)$,
$^{III}I_M(z)$, $^{III}J_M(z)$, $^{III}K_M(z)$, $^{III}L_M(z)$,
$^{IV}M_M(z)$, $^{IV}N_M(z)$, $^{IV}O_M(z)$, $^{IV}P_M(z)$
gebildet werden, von denen die von jeweils einem Sensorelement (I, II, III, IV) stammenden Mittelwerte in einer Vorverarbeitungs-Rechenschaltung (9) so miteinander verknüpft werden, dass vier von elektrischen Messfehlern befreite Mittelwerte $Q_M(z)$, $R_M(z)$, $S_M(z)$, $T_M(z)$ entstehen die der Recheneinheit (10) als Messwerte zugeführt werden, und dass
der aktuelle Feinpositionswert $z(Q_M, R_M, S_M, T_M) = m\ \mu( Q_E, R_E, S_E, T_E)$ dadurch ermittelt wird, dass die Differenz der Kreuzprodukte

$$[Q_E(\mu(z)) - R_E(\mu(z))][S_M(z) - T_M(z)] - [Q_M(z) - R_M(z)][S_E(\mu(z)) - T_E(\mu(z))]$$

gegen Null geht. (Fig. 6 und Fig. 7)

4. Verfahren nach Anspruch 1, **dadurch gekennzeichnet, dass** der Sensoreinheit (7) im Eichbetrieb quasi gleichzeitig sechzehn Ausgangssignale entnommen werden, die vier Gruppen bilden, von denen jede vier vom gleichen Sensorelement (I, II, III, IV) stammende Ausgangssignale
${}^{I}a_E(z(t))$, ${}^{I}b_E(z(t))$, ${}^{I}c_E(z(t))$, ${}^{I}d_E(z(t))$,
${}^{II}e_E(z(t))$, ${}^{II}f_E(z(t))$, ${}^{II}g_E(z(t))$, ${}^{II}h_E(z(t))$,
${}^{III}i_E(z(t))$, ${}^{III}j_E(z(t))$, ${}^{III}k_E(z(t))$, ${}^{III}l_E(z(t))$,
${}^{IV}m_E(z(t))$, ${}^{IV}n_E(z(t))$, ${}^{IV}O_E(z(t))$, ${}^{IV}p_E(z(t))$
umfasst, von denen gleichzeitig nacheinander mehrere (x) Amplitudenwertegruppen
$\Delta^{I}a_{E1}(z),...,\Delta^{I}a_{Ex}(z),................, \Delta^{I}d_{E1}(z),...,\Delta^{I}d_{Ex}(z).$
$\Delta^{II}e_{E1}(z),...,\Delta^{II}e_{Ex}(z),..............., \Delta^{II}h_{E1}(z),...,\Delta^{II}h_{Ex}(z), \Delta^{III}i_{E1}(z),...,\Delta^{III}i_{Ex}(z),.............., \Delta^{III}l_{E1}(z),...,\Delta^{III}l_{Ex}(z),$

$\Delta^{IV}m_{E1}(z),...,\Delta^{IV}m_{Ex}(z),..............., \Delta^{IV}P_{E1}(z),....\Delta^{IV}p_{Ex}(z)$
abgegriffen und einer Vorverarbeitungs-Rechenschaltung (9) zugeführt werden, welche die jeweils von einem Sensorelement stammenden Amplitudenwerte zunächst so miteinander verknüpft, dass vier von elektrischen Messfehlern befreite Signale entstehen, die dann zur Beseitigung von äußeren Störfeldgrößen miteinander zu mehreren (x) Rechenschaltungs-Amplituden-Wertepaaren $\Delta u_{E1}(z),..., \Delta u_{Ex}(z)$, $\Delta v_{E1}(z),..., \Delta v_{Ex}(z)$ verknüpft werden, aus denen gleichzeitig entsprechende Mittelwertpaare $U_E(z)$, $V_E(z)$ gebildet werden, die der Eicheinheit (31) unmittelbar als Referenzwertpaare zugeführt werden, die sie in Eichmittelwertpaare $U_E(\mu)$, $V_E(\mu)$ überführt, dass
der Sensoreinheit (7) im Messbetrieb quasi gleichzeitig sechzehn Ausgangssignale entnommen werden, die vier Gruppen bilden, von denen jede vier vom gleichen Sensorelement (I, II, III, IV) stammende Ausgangssignale
${}^{I}a_M(z(t))$, ${}^{I}b_M(z(t))$, ${}^{I}c_M(z(t))$, ${}^{I}d_M(z(t))$,
${}^{II}e_M(z(t))$, ${}^{II}f_M(z(t))$, ${}^{II}g_M(z(t))$, ${}^{II}h_M(z(t))$,
${}^{III}i_M(z(t))$, ${}^{III}j_M(z(t))$, ${}^{III}k_M(z(t))$, ${}^{III}l_M(z(t))$,
${}^{IV}m_M(z(t))$, ${}^{IV}n_M(z(t))$, ${}^{IV}O_M(z(t))$, ${}^{IV}p_M(z(t))$
umfasst, von denen gleichzeitig nacheinander mehrere (x) Amplitudenwertegruppen
$\Delta^{I}a_{M1}(z),...,\Delta^{I}a_{Mx}(z),................, \Delta^{I}d_{M1}(z),...,\Delta^{I}d_{Mx}(z).$
$\Delta^{II}m_{M1}(z),...,\Delta^{II}m_{Mx}(z),................, \Delta^{II}h_{M1}(z),...,\Delta^{II}h_{Mx}(z),$
$\Delta^{III}i_{M1}(z),...,\Delta^{III}i_{Mx}(z),................, \Delta^{III}l_{M1}(z),...,\Delta^{III}l_{Mx}(z),$
$\Delta^{IV}m_{M1}(z),...,\Delta^{IV}m_{Mx}(z),..............., \Delta^{IV}p_{M1}(z),...,\Delta^{IV}p_{Mx}(z)$
abgegriffen und einer Vorverarbeitungs-Rechenschaltung (9) zugeführt werden, welche die jeweils von einem Sensorelement stammenden Amplitudenwerte zunächst so miteinander verknüpft, dass vier von elektrischen Messfehlern befreite Signale entstehen, die dann zur Beseitigung von äußeren Störfeldgrößen miteinander zu mehreren (x) Rechenschaltungs-Amplituden-Wertepaaren $\Delta u_{M1}(z),..., \Delta u_{Mx}(z)$, $\Delta v_{M1}(z),..., \Delta v_{Mx}(z)$ verknüpft werden, aus denen gleichzeitig entsprechende Mittelwertpaare $U_M(z)$, $V_M(z)$ gebildet werden, und dass
der aktuelle Feinpositionswert $z(U_M, V_M) = m\,\mu(U_E, V_E)$ dadurch ermittelt wird, dass die Differenz der Kreuzprodukte

$$U_M(z)\, V_E(\mu(z)) - V_M(z)\, U_E(\mu(z))$$

gegen Null geht. (Fig. 8 und Fig. 9)

5. Verfahren nach einem der Ansprüche 1 bis 4, **dadurch gekennzeichnet, dass** für die fortlaufende gesonderte Bildung von Mittelwerten (A(z), B(z),...), jeweils ein neuer Mittelwert aus einem vorausgehenden, mit einem ersten Gewichtungsfaktor versehenen Mittelwert, der aus einer vorgebbaren Anzahl von vorausgehend erfassten Amplituden-Einzelwerten gebildet wurde, und dem neuesten, mit einem zweiten Gewichtungsfaktor versehenen zugehörigen Amplituden-Einzelwert gebildet wird.

6. Verfahren nach einem der Ansprüche 1 bis 5 **dadurch gekennzeichnet, dass** der Eichbetrieb vor dem eigentlichen Messbetrieb mit Hilfe der Eichvorrichtung (31) und eines externen Eichnormals (30) durchgeführt wird, das zur Erzielung einer definierten Korrelation mit der Erregereinheit mechanisch gekoppelt ist und die Eich-Feinpositionswerte ($\mu(z)$) liefert, wobei $\mu = z/m$ und bei starrer Kopplung $m = 1$ ist.

**7.** Verfahren zur Ermittlung der Position eines zu überwachenden Körpers, dessen Bewegungsbereich in mehrere Mess-Segmente unterteilt ist, die einerseits absolut gezählt und für die andererseits Feinpositionswerte (z) gemäß einem der Ansprüche 1 bis 5 ermittelt werden, **dadurch gekennzeichnet, dass** sowohl im Eich- als auch im Messbetrieb jeweils sowohl die Ausgangssignale $a_E(z(t))$, $b_E(z(t))$,... der Sensoreinheit (7) als auch die aus ihnen abgeleiteten Mittelwerte A(z), B(z),... zumindest halbperiodisch sind, wobei die Halbperiodenlänge jeweils der Länge des zugehörigen Mess-Segments entspricht.

**8.** Verfahren nach einem der vorhergehenden Ansprüche, **dadurch gekennzeichnet, dass** sowohl im Eich- als auch im Messbetrieb jeweils die Sensorsignale von Magnetfeld-Sensoren geliefert werden.

**9.** Verfahren nach einem der vorhergehenden Ansprüche, **dadurch gekennzeichnet, dass** die Sensoreinheit (7) einen Multiplexer (2) umfasst, mit dessen Hilfe sowohl im Eich- als auch im Messbetrieb jeweils die Signale der mehreren Sensorelemente mit Hilfe eines Multiplexers alternierend einem einzigen Verarbeitungskanal zugeführt werden, der einen Verstärker (3) und einen Analog/Digitalwandler umfasst, der dazu dient, die Ausgangssignale a(z(t)), b(z(t)),... der Sensoreinheit (7) in eine digitale Form zu bringen, dass zur Wiederherstellung der Mehrkanaligkeit ein Demultiplexer verwendet wird und dass für wenigstens einen der Amplitudenwerte $\Delta a(z)$, $\Delta b(z)$,..., die zu dem gleichen Feinpositionswert (z) gehören, so lange eine Zwischenspeicherung erfolgt, bis die jeweils anderen zur Verfügung stehen, damit sie alle gleichzeitig weiter verarbeitet werden können.

**10.** Verfahren nach einem der vorhergehenden Ansprüche, **dadurch gekennzeichnet, dass** im Messbetrieb durch die Rechenschaltung (10) aus den jeweiligen Messwerten $A_M(z)$, $B_M(z)$,... und den jeweiligen echten Referenzwerten $A_E(\mu)$; $B_E(\mu)$,... die sie von dem Vergleichswertspeicher (14) erhält, Ausgangswerte ö(t) berechnet werden,
dass zur Bildung einer Regelschleife einem Steuereingang des Vergleichswertspeichers (14) ein von einer Rückkopplungsschaltung (15) erzeugter, veränderlicher Eingangswert $\varphi(t)$ zugeführt-wird, der vom Ausgangswert $\delta(t)$ der Rechenschaltung (10) abhängig ist,
und dass der Eingangswert $\delta(t)$ des Vergleichswertspeichers (14) dann, wenn der Ausgangswert ö(t) der Rechenschaltung (10) zumindest näherungsweise gleich Null ist, das m-fache des zu den betreffenden echten Referenzwerten $A_E(\mu)$, $B_E(\mu)$,...gehörenden, im Vergleichswertspeicher (14) gespeicherten, bekannten Feinpositionswertes $\mu(A_E, B_E,...)$ gleich dem gesuchten Feinpositionswert (z) gesetzt wird: $z(A_M, B_M,...) = m\ \mu(A_E, B_E,...)$.

**11.** Verfahren nach Anspruch 10, **dadurch gekennzeichnet, dass** das zur Veränderung des Eingangswertes p(t) des Vergleichwertspeichers (14) dienende Inkrementalsignal und das Vorzeichen des Ausgangswertes ö(t) der Rechenschaltung (10) zusätzlich zum Feinpositionswert (z) über eine Schnittstelle (16) einem Verwender zur Verfügung gestellt werden können.

**12.** Verfahren nach einem der vorhergehenden Ansprüche, **dadurch gekennzeichnet, dass** in Abhängigkeit von den Amplituden der Sensorsignale die Spannungsniveaus der Spannungsversorgung der Sensoren so gesteuert werden, dass eine optimale Anpassung des Signalspannungsbereichs an den Eingangsspannungsbereich der die Sensorsignale verarbeitenden Schaltungseinheiten gewährleistet ist.

**13.** Verfahren nach einem der vorhergehenden Ansprüche, **dadurch gekennzeichnet, dass** die echten Referenzwerte $A_E(\mu)$, $B_E(\mu)$,... und der bekannte Feinpositionswert $\mu(A_E, B_E,...)$ in Form diskreter Stützwerte gespeichert werden, zwischen denen zur Ermittlung von Zwischenwerten eine Interpolation erfolgt.

**14.** Verfahren nach einem der vorhergehenden Ansprüche, **dadurch gekennzeichnet, dass** der durch die Lauf- und Verarbeitungszeiten entstehende Schleppfehler korrigiert wird.

**15.** Vorrichtung zur Durchführung des Verfahrens nach einem oder mehreren der vorhergehenden Ansprüche.

## Claims

**1.** A method of ascertaining a fine position value z describing the instantaneous absolute position of a movable body by means of a position sensor which includes a stationary sensor unit (7) and an exciter unit which moves with the body and which can pass through a predetermined range of movement comprising at least one measuring segment, wherein the sensor unit (7) delivers a plurality of output signals which jointly, at least within a measuring segment, reproducibly and definitely describe a fine position value z and wherein in the measuring mode the values of signals derived from the output signals are compared in a computing unit (10) to reference values stored in a comparative value memory (14),
**characterized in that**
in a calibration mode of the position sensor in which the exciter unit is in a defined relationship with respect to a calibration unit (31) and passes through its range of movement at least once amplitude value groups $\Delta a_E(z)$, $\Delta b_E(z)$,... are successively simultaneously taken off from the output signals $a_E(z(t))$, $b_E(z(t))$,... of the sensor unit (7), from which amplitude value groups there are formed groups of separate average values $A_E(z)$, $B_E(z)$,... , which respectively implicitly contain the associated true fine position value z as an unknown quantity and are fed to the calibration unit (31) which converts same into genuine reference values $A_E(\mu(z))$, $B_E(\mu(z))$,... using thereby the calibration fine position values $\mu(z)$ which are known thereto and which are correlated in defined relationship with the fine position values $z(A_E, B_E,...)$ and stores them with the associated known fine position value $\mu(A_E, B_E,...)$ respectively as values multiplets belonging together in the comparative value memory (14), and
in the measuring mode for each current fine position value z to be ascertained amplitude value groups $\Delta a_M(z)$, $\Delta b_M(z)$,... are successively simultaneously taken off from the output signals $a_M(z(t))$, $b_M(z(t))$,... of the sensor unit (7) identifying said current fine position value and from which amplitude value groups there are formed groups of separate average values as measuring values $A_M(z)$, $B_M(z)$,... , from which then the current fine position value $z(A_M, B_M,...) = m\ \mu(A_E, B_E,...)$ is ascertained in the computing unit (10) by using the genuine reference values $A_E(\mu(z))$, $B_E(\mu(z))$,... stored in the comparative value memory (14) and the associated known fine position value$\mu$ $(A_E, B_E,...)$,
**in that** the difference of the cross products from the reference values of a group and the measuring values of a group going towards zero.

2. A method as set forth in claim 1 **characterized in that** in the calibration mode precisely two output signals $u_E(z(t)$, $v_E(z(t)$ which are pre-processed in the sensor unit (7) are virtually simultaneously taken from the sensor unit (7), from which a plurality (x) of pairs of amplitude values $\Delta u_{E1}(z)$,..., $\Delta u_{Ex}(z)$, $\Delta v_{E1(z)}$,..., $\Delta v_{Ex}(z)$ are successively taken off and simultaneously corresponding pairs of average values $U_E(z)$, $V_E(z)$ are formed therefrom, which pairs of average values are directly fed as pairs of reference values to the calibration unit (31) which converts them into pairs of calibration average values $U_E(\mu(z))$,$V_E(\mu(z))$ and
in the measuring mode precisely two output signals $u_M(z(t))$, $v_M(z(t))$ which are pre-processed in the sensor unit (7) are virtually simultaneously taken from the sensor unit (7), from which a plurality (x) of pairs of amplitude values $\Delta u_{M1}(z)$,..., $\Delta u_{mx}(z)$, $\Delta v_{M1}(z)$,..., $\Delta v_{Mx}(z)$ are successively taken off and simultaneously corresponding pairs of average values $U_M(z)$, $V_M(z)$ are formed therefrom, which pairs of average values are fed as pairs of reference values to the computing unit (10), and
the current fine position value $z(U_M, V_M) = m\ \mu(U_E, V_E)$ is ascertained by the difference of the cross products

$$U_M(z)\ V_E(\mu(z)) - V_M(z)\ U_E(\mu(z))$$

going towards zero (Figure 1 and Figure 2).

3. A method as set forth in claim 1 **characterized in that** in the calibration mode sixteen output signals are virtually simultaneously taken from the sensor unit (7), which form four groups, of which each includes four output signals originating from the same sensor element (I, II, III, IV)
${}^{I}a_E(z(t))$, ${}^{I}b_E(z(t))$,${}^{I}c_E(z(t))$, ${}^{I}d_E(z(t))$,
${}^{II}e_E(z(t))$, ${}^{II}f_E(z(t))$, ${}^{II}g_E(z(t))$, ${}^{II}h_E(z(t))$,
${}^{II}i_E(z(t))$, ${}^{III}j_E(z(t))$, ${}^{III}k_E(z(t))$, ${}^{III}l_E(z(t))$,
${}^{IV}m_E(z(t))$, ${}^{IV}n_E(z)(t))$, ${}^{IV}O_E(z(t))$, ${}^{IV}p_E(z(t))$
from which a plurality (x) of groups of amplitude values
$\Delta^{I}a_{E1}(z)$,...,$\Delta^{I}a_{Ex}(z)$,..............., $\Delta^{I}d_{E1}(z)$,...,$\Delta^{I}d_{Ex}(z)$.
$\Delta^{II}e_{E1}(z)$,...,$\Delta^{II}e_{Ex}(z)$,..............., $\Delta^{II}h_{E1}(z)$,...,$\Delta^{II}h_{Ex}(z)$,
$\Delta^{III}i_{E1}(z)$, $\Delta^{III}i_{Ex}(z)$,................, $\Delta^{III}l_{E1}(z)$,...,$\Delta^{III}l_{Ex}(z)$,
$\Delta^{IV}m_{E1}(z)$,...,$\Delta^{IV}m_{Ex}(z)$,..............., $\Delta^{IV}p_{E1}(z)$,...,$\Delta^{IV}p_{Ex}(z)$
are simultaneously successively taken and corresponding groups of average values are simultaneously formed therefrom
${}^{I}A_E(z)$, ${}^{I}B_E(z)$, ${}^{I}C_E(z)$, ${}^{I}D_E(z)$ and
${}^{II}E_E(z)$, ${}^{II}F_E(z)$, ${}^{II}G_E(z)$, ${}^{II}H_E(z)$ and
${}^{III}I_E(z)$, ${}^{III}J_E(z)$, ${}^{III}K_E(z)$, ${}^{III}L_E(z)$ and
${}^{IV}M_E(z)$, ${}^{IV}N_E(z)$, ${}^{IV}O_E(z)$, ${}^{IV}P_E(z)$
of which the average values originating from a respective sensor element (I, II, III, IV) are linked together in a pre-processing computing circuit (9) in such a way that four average values $Q_E(z)$, $R_E(z)$, $S_E(z)$, $T_E(z)$ freed of electric measuring errors are produced, which are fed as a group to the calibration unit (31) which converts them into a corresponding group of four calibration average values $Q_E(\mu(z))$, $R_E(\mu(z))$, $S_E(\mu(z))$, $T_E(\mu(z))$, and
in the measuring mode sixteen output signals are virtually simultaneously taken from the sensor unit (7), forming four groups, each of which includes output signals originating from the same sensor element (I, II, III, IV)
$Ia_M(z(t))$, $^{I}b_M(z(t))$, $^{I}c_M(z(t))$, $^{I}d_M(z(t))$,
$^{II}e_M(z(t))$, $^{II}f_M(z(t))$, $^{II}g_M(z(t))$, $^{II}h_M(z(t))$,
$^{III}i_M(z(t))$, $^{III}j_M(z(t))$, $^{III}k_M(z(t))$, $^{III}l_M(z(t))$,
$^{IV}m_M(z(t))$, $^{IV}n_M(z(t))$, $^{IV}o_M(z(t))$, $^{IV}p_M(z(t))$
of which a plurality (x) of groups of amplitude values are simultaneously successively taken off
$\Delta^{I}a_{M1}(z),...,\Delta^{I}a_{Mx}(z),............, \Delta^{I}d_{M1}(z),...,\Delta^{I}d_{Mx}(z).$
$\Delta^{II}e_{M1}(z),...,\Delta^{II}e_{Mx}(z),............, \Delta^{II}h_{M1}(z),..., {}^{II}h_{Mx}(z),$
$\Delta^{III}i_{M1}(z),...,\Delta^{III}i_{Mx}(z),............., \Delta^{III}l_{M1}(z),...,\Delta^{III}l_{Mx}(z),$
$\Delta^{IV}m_{M1}(z),..,\Delta^{IV}m_{Mx}(z),..........., \Delta^{IV}p_{M1}(z),..., \Delta^{IV}p_{Mx}(z)$
and corresponding groups of average values are simultaneously formed therefrom
$^{I}A_M(z)$, $^{I}B_m(z)$, $^{I}C_M(z)$, $^{I}D_M(z)$,
$^{II}E_M(z)$, $^{II}F_M(z)$, $^{II}G_M(z)$, $^{II}H_M(z)$,
$^{III}I_M(z)$, $^{III}J_M(z)$, $^{III}K_M(z)$, $^{III}L_M(z)$,
$^{IV}M_M(z)$, $^{IV}N_M(z)$, $^{IV}O_M(z)$, $^{IV}P_M(z)$
of which the average values respectively originating from a sensor element (I, II, III, IV) are so linked together in a pre-processing computing circuit (9) that four average values $Q_M(z)$, $R_M(z)$, $S_M(z)$, $T_M(z)$ freed of electric measuring errors are produced, which are fed to the computing unit (10) as measuring values, and
the current fine position value $z(Q_M, R_M, S_M, T_M) = m\,\mu(Q_E, R_E, S_E, T_E)$ is ascertained by the difference of the cross products

$$[Q_E(\mu(z)) - R_E(\mu(z))][S_M(z) - T_M(z)] - [Q_M(z) - R_M(z)][S_E(\mu(z)) - T_E(\mu(z))]$$

going towards zero (Figure 6 and Figure 7).

4. A method as set forth in claim 1 **characterized in that** in the calibration mode sixteen output signals are virtually simultaneously taken from the sensor unit (7), which form four groups, of which each includes four output signals originating from the same sensor element (I, II, III, IV)
$^{I}a_E(z(t))$, $^{I}b_E(z(t))$, $^{I}C_E(z(t))$, $^{I}d_E(z(t))$,
$^{II}e_E(z(t))$, $^{II}f_E(z(t))$, $^{II}g_E(z(t))$, $^{II}h_E(z(t))$,
$^{III}i_E(z(t))$, $^{III}j_E(z(t))$, $^{III}k_E(z(t))$, $^{III}l_E(z(t))$,
$^{IV}m_E(z(t))$, $^{IV}n_E(z(t))$, $^{IV}O_E(z(t))$, $^{IV}p_E(z(t))$
from which a plurality (x) of groups of amplitude values are simultaneously successively taken off
$\Delta^{I}a_{E1}(z),...,\Delta^{I}a_{Ex}(z),................, \Delta^{I}d_{E1}(z),....\Delta^{I}d_{Ex}(z).$
$\Delta^{II}e_{E1}(z),...,\Delta^{II}e_{Ex}(z).............., \Delta^{II}h_{E1}(z),...,\Delta^{II}h_{Ex}(z),$
$\Delta^{III}i_{E1}(z),...,\Delta^{III}{}_{Ex}(z)..................., \Delta^{III}l_{E1}(z),...,\Delta^{III}l_{Ex}(z),$
$\Delta^{IV}m_{E1}(z),...,\Delta^{IV}m_{Ex}(z),..............., \Delta^{IV}p_{E1}(z),...,\Delta^{IV}p_{Ex}(z)$
and are fed to a pre-processing computing circuit (9) which firstly links together the amplitude values originating from the same sensor element respectively in such a way that four signals freed of electric measuring errors are produced, which then to eliminate external interference field values are linked together to afford a plurality (x) of computing circuit amplitude value pairs $\Delta u_{E1}(z),..., \Delta u_{Ex}(z), \Delta v_{E1}(z),..., \Delta v_{Ex}(z)$, from which corresponding pairs of average values $U_E(z)$, $V_E(z)$ are simultaneously formed, which are directly fed as pairs of reference values to the calibration unit (31) which converts them into pairs of calibration average values $U_E(\mu)$, $V_E(\mu)$,
in the measuring mode sixteen output signals are virtually simultaneously taken from the sensor unit (7), forming four groups, each of which includes four output signals originating from the same sensor element (I, II, III, IV)
$^{I}a_M(z(t))$, $^{I}b_M(z(t))$, $Ic_M(z(t))$, $^{I}d_M(z(t))$,
$^{II}e_M(z(t))$, $^{II}f_M(z(t))$, $^{II}g_M(z(t))$, $^{II}h_M(z(t))$,
$^{III}i_M(z(t))$, $^{III}j_M(z(t))$, $^{III}k_M(z(t))$, $^{III}l_M(z(t))$,
$^{IV}m_M(z(t))$, $^{IV}n_M(z(t))$, $^{IV}o_M(z(t))$, $^{IV}p_M(z(t))$
of which a plurality (x) of groups of amplitude values
$\Delta^{I}a_{M1}(z),...,\Delta^{I}a_{Mx}(z),............., \Delta^{I}d_{M1}(z),...,\Delta^{I}d_{Mx}(z).$
$\Delta^{II}e_{M1}(z),...,\Delta^{II}e_{Mx}(z),..............., \Delta^{II}h_{M1}(z),...,\Delta^{II}h_{Mx}(z),$

$\Delta^{III}l_{M1}(z),...,\Delta^{III}i_{Mx}(z),..........., \Delta^{III}l_{M1}(z),...,\Delta^{III}l_{Mx}(z)$,
$\Delta^{IV}m_{M1}(z),...,\Delta^{IV}m_{Mx}(z),.............., \Delta^{IV}p_{M1}(z),...,\Delta^{IV}p_{Mx}(z)$
are simultaneously successively taken off and fed to a pre-processing computing circuit (9) which firstly links together the amplitude values originating from the same sensor element respectively in such a way that four signals freed of electric measuring errors are produced, which then to eliminate external interference field values are linked together to afford a plurality (x) of computing circuit amplitude value pairs $\Delta u_{M1}(z),..., \Delta u_{Mx}(z), \Delta v_{M1}(z),..., \Delta v_{Mx}(z)$, from which corresponding pairs of average values $U_M(z)$, $V_M(z)$ are simultaneously formed, and
the current fine position value $z(U_M, V_M) = m\ \mu(U_E, V_E)$ is determined by the difference of the cross products

$$U_M(z)\ V_E(\mu(z)) - V_M(z)\ U_E(\mu(z))$$

going towards zero (Figure 8 and Figure 9).

**5.** A method as set forth in one of claims 1 through 4 **characterized in that** for ongoing separate formation of average values (A(z), B(z),...) a respective new average value is formed from a preceding average value which was formed from a predeterminable number of previously ascertained amplitude individual values and which is provided with a first weighting factor and the newest associated amplitude individual value provided with a second weighting factor.

**6.** A method as set forth in one of claims 1 through 5 **characterized in that** the calibration mode is carried out prior to the actual measuring mode by means of the calibration device (31) and an external calibration standard (30) which is mechanically coupled to the exciter unit for achieving a defined correlation and delivers the calibration fine position values ($\mu(z)$) wherein $\mu = z/m$ and with rigid coupling $m = 1$.

**7.** A method of ascertaining the position of a body to be monitored, the range of movement of which is subdivided into a plurality of measuring segments which on the one hand are absolutely counted and for which on the other hand fine position values (z) are ascertained as set forth in one of claims 1 through 5 **characterized in that** both in the calibration and also in the measuring mode both the output signals $a_E(z(t))$, $b_E(z(t))$,... of the sensor unit (7) and also the average values A(z), B(z),... derived therefrom are respectively at least semi-periodic, wherein the semi-period length respectively corresponds to the length of the associated measuring segment.

**8.** A method as set forth in one of preceding claims **characterized in that** the sensor signals are respectively delivered by magnetic field sensors both in the calibration and also in the measuring mode.

**9.** A method as set forth in one of the preceding claims **characterized in that** the sensor unit (7) includes a multiplexer (2), by means of which, both in the calibration and also in the measuring mode, the respective signals of the plurality of sensor elements are fed alternately to a single processing channel including an amplifier (3) and an analog/digital converter which serves to put the output signals a(z(t)), b(z(t)),... of the sensor unit (7) into a digital form, that a demultiplexer is used for restoration of the multi-channel configuration and that for at least one of the amplitude values $\Delta a(z)$, $\Delta b(z)$,... belonging to the same fine position value (z) intermediate storage is effected until the respective others are available so that they can all be simultaneously further processed.

**10.** A method as set forth in one of the preceding claims **characterized in that** in the measuring mode output values $\delta(t)$ are calculated by the computing circuit (10) from the respective measuring values $A_M(z)$, $B_M(z)$,... and the respective genuine reference values $A_E(\mu)$, $B_E(\mu)$,... which it acquires from the comparative value memory (14),
to form a regulating loop a variable input value $\varphi(t)$ which is produced by a feedback circuit (15) and which is dependent on the output value $\delta(t)$ of the computing circuit (10) is fed to a control input of the comparative value memory (14), and
the input value $\varphi(t)$ of the comparative value memory (14), when the output value $\delta(t)$ of the computing circuit (10) is at least approximately equal to zero, m-times of the known fine position value $\mu(A_E, B_E,...)$ which belongs to the genuine reference values $A_E(\mu)$, $B_E(\mu)$,... in question and which is stored in the comparative value memory (14) is set equal to the fine position value (z) being sought: $z(A_M, B_M,...) = m\ \mu(A_E, B_E,...)$.

**11.** A method as set forth in claim 10 **characterized in that** the incremental signal serving to change the input value $\varphi(t)$ of the comparative value memory (14) and the sign of the output value $\delta(t)$ of the computing circuit (10) can be made available to a user in addition to the fine position value (z) by way of an interface (16).

**12.** A method as set forth in one of the preceding claims **characterized in that** the voltage level of the voltage supply of the sensors is so controlled in dependence on the amplitudes of the sensor signals that optimum adaptation of the signal voltage range to the input voltage range of the circuit units processing the sensor signals is ensured.

**13.** A method as set forth in one of the preceding claims **characterized in that** the genuine reference values $A_E(\mu)$, $B_E(\mu)$,... and the known fine position value $\mu(A_E, B_E,...)$ are stored in the form of discrete support values, between which an interpolation operation is effected to ascertain intermediate values.

**14.** A method as set forth in one of the preceding claims **characterized in that** draging error occurring due to the delay and processing times is corrected.

**15.** Apparatus for carrying out the method as set forth in one or more of the preceding claims.

## Revendications

**1.** Procédé de détermination d'une valeur de position fine z décrivant la position absolue momentanée d'un corps mobile au moyen d'un capteur de position comprenant une unité de capteur (7) fixe et une unité d'excitateur se déplaçant avec le corps, laquelle peut traverser une zone de déplacement donnée constituée d'au moins un segment de mesure, l'unité de capteur (7) délivrant plusieurs signaux de sortie décrivant ensemble de manière claire et reproductible une valeur de position fine z au moins à l'intérieur d'un segment de mesure, et les valeurs de signaux déduits des signaux de sortie étant en mode de mesure comparées dans une unité de calcul (10) à des valeurs de référence stockées dans une mémoire de valeurs de comparaison (14),
**caractérisé en ce que**,
dans un mode d'étalonnage du capteur de position, où l'unité d'excitateur se trouve dans une relation définie avec une unité d'étalonnage (31) et traverse au moins une fois sa zone de déplacement, des groupes de valeurs d'amplitude $\Delta a_E(z)$, $\Delta b_E(z)$,... successifs sont prélevés simultanément des signaux de sortie $a_E(z(t))$, $b_E(z(t))$, ... de l'unité de capteur (7), à partir desquels sont formés des groupes de moyennes séparées $A_E(z)$, $B_E(z)$, ..., lesquels contiennent chacun implicitement la valeur de position fine z réelle correspondante en tant qu'inconnue et sont communiqués à l'unité d'étalonnage (31) qui les transforme en valeurs de référence $A_E(\mu(z))$, $B_E(\mu(z))$, ... réelles en recourant aux valeurs d'étalonnage de position fine $\mu(z)$ qui lui sont connues, corrélées de manière définie aux valeurs de position fine $z(A_E, B_E, ...)$, et les stocke avec la valeur de position fine $\mu(A_E, B_E, ...)$ connue correspondante comme multiplets de valeurs correspondants dans la mémoire de valeurs de comparaison (14), et
**en ce qu'**en mode de mesure également, pour chaque valeur de position fine z actuelle à déterminer, des groupes de valeurs d'amplitude $\Delta a_M(z)$, $\Delta b_M(z)$, ... successifs sont simultanément prélevés des signaux de sortie $a_M(z(t))$, $b_M(z(t))$, ... de l'unité de capteur (7) qui l'identifient, et des groupes de moyennes séparées sont formés à partir de ceux-ci en tant que valeurs de mesure $A_M(z)$, $B_M(z)$, ..., à partir desquelles la valeur de position fine $z(A_M, B_M, ...) = m\ \mu(A_E, B_E, ...)$ actuelle est ensuite déterminée dans l'unité de calcul (10) avec les valeurs de référence $A_E(\mu(z))$, $B_E(\mu(z))$, ... réelles et la valeur de position fine $\mu(A_E, B_E, ...)$ connue correspondante stockées en mémoire de valeurs de comparaison (14), **en ce que** la différence des produits croisés des valeurs de référence d'un groupe et des valeurs de mesure d'un groupe tend vers zéro.

**2.** Procédé selon la revendication 1, **caractérisé en ce qu'**en mode d'étalonnage, exactement deux signaux de sortie $u_E(z(t))$, $v_E(z(t))$ pré-traités dans l'unité de capteur (7) sont extraits quasi simultanément de l'unité de capteur (7), plusieurs (x) paires de valeurs d'amplitude $\Delta u_{E1}(z)$, ..., $\Delta u_{EX}(z)$, $\Delta v_{E1}(z)$, ..., $\Delta v_{Ex}(z)$ successives en étant prélevées, à partir desquelles sont simultanément formées des paires de moyennes $U_E(z)$, $V_E(z)$ correspondantes, lesquelles sont directement communiquées à l'unité d'étalonnage (31) en tant que paires de valeurs de référence, que celle-ci transforme en paires de moyennes d'étalonnage $U_E(\mu(z))$, $V_E(\mu(z))$, et **en ce qu'**
en mode de mesure, exactement deux signaux de sortie $u_M(z(t))$, $v_M(z(t))$ pré-traités dans l'unité de capteur (7) sont extraits quasi simultanément de l'unité de capteur (7), plusieurs (x) paires de valeurs d'amplitude $\Delta u_{M1}(z)$, ..., $\Delta u_{Mx}(z)$, $\Delta v_{M1}(z)$, ..., $\Delta v_{Mx}(z)$ successives en étant prélevées, des paires de moyennes $U_M(z)$, $V_M(z)$ correspondantes étant formées, lesquelles sont communiquées à l'unité de calcul (10) en tant que paires de valeurs de mesure, et **en ce que** la valeur de position fine $z(U_M, V_M) = m\ \mu(U_E, V_E)$ actuelle est déterminée **en ce que** la différence des produits croisés

$$U_M(z)\ V_E(\mu(z)) - V_M(z)\ U_E(\mu(z))$$

tend vers zéro (fig. 1 et fig. 2).

3. Procédé selon la revendication 1, **caractérisé en ce qu'**en mode d'étalonnage, seize signaux de sortie sont extraits quasi simultanément de l'unité de capteur (7), lesquels forment quatre groupes, dont chacun comprend quatre signaux de sortie provenant du même élément de capteur (I, II, III, IV) :

$^{I}a_E(z(t))$, $^{I}b_E(z(t))$, $^{I}c_E(z(t))$, $^{I}d_E(z(t))$,
$^{II}e_E(z(t))$, $^{II}f_E(z(t))$, $^{II}g_E(z(t))$,$^{II}h_E(z(t))$,
$^{III}i_E(z(t))$, $^{III}j_E(z(t))$, $^{III}k_E(z(t))$, $^{III}I_E(z(t))$,
$^{IV}m_E(z(t))$, $^{IV}n_E(z(t))$, $^{IV}O_E(z(t))$, $^{IV}p_E(z(t))$

dont plusieurs (x) groupes de valeurs d'amplitude successifs :

$\Delta^{I}a_{E1}(z),..., \Delta^{I}a_{EX}(z),........, \Delta^{I}d_{E1}(z),..., \Delta^{I}d_{EX}(z)$,
$\Delta^{II}e_{E1}(z),..., \Delta^{II}e_{EX}(z),.........., \Delta^{II}h_{E1}(z),..., \Delta^{II}h_{EX}(z)$,
$\Delta^{III}i_{E1}(z),..., \Delta^{III}i_{EX}(z),........, \Delta^{III}I_{E1}(z),..., \Delta^{III}I_{EX}(z)$,
$\Delta^{IV}{}_{mE1}(z),..., \Delta^{IV}m_{EX}(z),........., \Delta^{IV}p_{E1}(z),..., \Delta^{IV}p_{EX}(z)$

sont simultanément prélevés, des groupes de moyennes correspondants :

$^{I}A_E(z)$, $^{I}B_E(z)$, $^{I}C_E(z)$, $^{I}D_E(z)$ ou
$^{II}E_E(z)$, $^{II}F_E(z)$, $^{II}G_E(z)$, $^{II}H_E(z)$ ou
$^{III}I_E(z)$, $^{III}J_E(z)$, $^{III}K_E(z)$, $^{III}L_E(z)$ ou
$^{IV}M_E(z)$, $^{IV}N_E(z)$, $^{IV}O_E(z)$, $^{IV}P_E(z)$

étant simultanément formés à partir de ceux-ci, dont les moyennes provenant d'éléments de capteur (I, II, III, IV) respectifs sont associées les unes aux autres dans un circuit de calcul de pré-traitement (9), de manière à générer quatre moyennes $Q_E(z)$, $R_E(z)$, $S_E(z)$, $T_E(z)$ exemptes d'erreurs de mesure électriques, communiquées comme groupe à l'unité d'étalonnage (31), laquelle les transforme en groupe correspondant de quatre moyennes d'étalonnage $Q_E(\mu(z))$, $R_E(\mu(z))$, $S_E(\mu(z))$, $T_E(\mu(z))$,
**en ce qu'**en mode de mesure, seize signaux de sortie sont extraits quasi simultanément de l'unité de capteur (7), lesquels forment quatre groupes, dont chacun comprend quatre signaux de sortie provenant du même élément de capteur (I, II, III, IV) :

$^{I}a_M(z(t))$, $^{I}b_M(z(t))$, $^{I}c_M(z(t))$, $Id_M(z(t))$,
$^{II}e_M(z(t))$, $^{II}f_M(z(t))$, $^{II}g_M(z(t))$, $^{II}h_M(z(t))$ ;
$^{III}i_M(z(t))$, $^{III}j_M(z(t))$, $^{III}k_M(z(t))$, $^{III}I_M(z(t))$,
$^{IV}m_M(z(t))$, $^{IV}n_M(z(t))$, $^{IV}o_M(z(t))$, $^{IV}p_M(z(t))$
dont plusieurs (x) groupes de valeurs d'amplitude successifs :
$\Delta^{I}a_{M1}(z),..., \Delta^{I}a_{MX}(z),........, \Delta^{I}d_{M1}(z),..., \Delta^{I}d_{MX}(z)$.
$\Delta^{II}e_{M1}(z),..., \Delta^{II}e_{MX}(z),........, \Delta^{II}h_{M1}(z),..., \Delta^{II}h_{MX(z)}$,
$\Delta^{III}i_{M1}(z),..., \Delta^{III}i_{MX}(z),........., \Delta^{III}I_{M1}(z),..., \Delta^{III}I_{MX}(z)$,
$\Delta^{IV}m_{M1}(z),..., \Delta^{IV}m_{MX}(z),........, \Delta^{IV}p_{M1}(z),..., \Delta^{IV}p_{MX}(z)$

sont simultanément prélevés, des groupes de moyennes correspondants :

$^{I}A_M(z)$, $^{I}B_M(z)$, $^{I}C_M(z)$, $^{I}D_M(z)$,
$^{II}E_M(z)$, $^{II}F_M(z)$, $^{II}G_M(z)$, $^{II}H_M(z)$,
$^{III}I_M(z)$, $^{III}J_M(z)$, $^{III}K_M(z)$, $^{III}L_M(z)$,
$^{IV}M_M(z)$, $^{IV}N_M(z)$, $^{IV}O_M(z)$, $^{IV}P_M(z)$

étant simultanément formés à partir de ceux-ci, dont les moyennes provenant d'éléments de capteur (I, II, III, IV) respectifs sont associées les unes aux autres dans un circuit de calcul de pré-traitement (9), de manière à générer quatre moyennes $Q_M(z)$, $R_M(z)$, $S_M(z)$, $T_M(z)$ exemptes d'erreurs de mesure électriques, communiquées comme valeurs de mesure à l'unité de calcul (10), et
**en ce que** la valeur de position fine $z(Q_M, R_M, S_M, T_M) = m\ \mu(Q_E, R_E, S_E, T_E)$ actuelle est déterminée **en ce que** la différence des produits croisés

$$[Q_E(\mu(z))-R_E(\mu(z))][S_M(z)-T_M(z)]-[Q_M(z)-R_M(z)][S_E(\mu(z))-T_E(\mu(z))]$$

tend vers zéro (fig. 6 et fig. 7).

**4.** Procédé selon la revendication 1, **caractérisé en ce qu'**en mode d'étalonnage, seize signaux de sortie sont extraits quasi simultanément de l'unité de capteur (7), lesquels forment quatre groupes, dont chacun comprend quatre signaux de sortie provenant du même élément de capteur (I, II, III, IV) :

$^{I}a_E(z(t))$, $^{I}b_E(z(t))$, $^{I}c_E(z(t))$, $^{I}d_E(z(t))$,
$^{II}e_E(z(t))$, $^{II}f_E(z(t))$, $^{II}g_E(z(t))$, $^{II}h_E(z(t))$,
$^{III}i_E(z(t))$, $^{III}j_E(z(t))$, $^{III}k_E(z(t))$, $^{III}l_E(z(t))$,
$^{IV}m_E(z(_t))$, $^{IV}n_E(z(t))$, $^{IV}o_E(z(t))$, $^{IV}p_E(z(t))$

dont plusieurs (x) groupes de valeurs d'amplitude successifs :

$\Delta^{I}a_{E1}(z),\ldots, \Delta^{I}a_{EX}(z),\ldots\ldots, \Delta^{I}d_{E1}(z),\ldots, \Delta^{I}d_{EX}(z)$.
$\Delta^{II}e_{E1}(z),\ldots, \Delta^{II}e_{EX}(z), \ldots\ldots, \Delta^{II}h_{E1}(z),\ldots, \Delta^{II}h_{EX}(z)$,
$\Delta^{III}i_{E1}(z),\ldots, \Delta^{III}i_{EX}(z),\ldots\ldots, \Delta^{III}l_{E1}(z),\ldots, \Delta^{III}l_{EX}(z)$,
$\Delta^{IV}m_{E1}(z),\ldots, \Delta^{IV}m_{EX}(z),\ldots\ldots, \Delta^{IV}p_{E1}(z),\ldots, \Delta^{IV}{}_{pEX}(z)$

sont simultanément prélevés et communiqués à un circuit de calcul de pré-traitement (9), qui dans un premier temps associe les unes aux autres les valeurs d'amplitude provenant d'éléments de capteur respectifs de manière à générer quatre signaux exempts d'erreurs de mesure électriques, associés ensuite les uns aux autres pour la suppression de grandeurs de champ parasite externes en formant plusieurs (x) paires de valeur d'amplitude de circuit de calcul $\Delta u_{E1}(z),\ldots, \Delta u_{EX}(z), \Delta v_{E1}(z),\ldots, \Delta V_{EX}(z)$, à partir desquelles sont simultanément formées des paires de moyennes $U_E(z)$, $V_E(z)$ correspondantes, lesquelles sont directement communiquées (31) comme paires de valeurs de référence à l'unité d'étalonnage qui les transforme en paires de moyennes d'étalonnage $U_E(\mu)$, $V_E(\mu)$, **en ce qu'**
en mode de mesure, seize signaux de sortie sont extraits quasi simultanément de l'unité de capteur (7), lesquels forment quatre groupes, dont chacun comprend quatre signaux de sortie provenant du même élément de capteur (I, II, III, IV) :

$^{I}a_M(z(t))$, $^{I}b_M(z(t))$, $^{I}c_M(z(t))$, $^{I}d_M(z(t))$,
$^{II}e_M(z(t))$, $^{II}f_M(z(t))$, $^{II}g_M(z(t))$, $^{II}h_M(z(t))$;
$^{III}i_M(z(t))$, $^{III}j_M(z(t))$, $^{III}k_M(z(t))$, $^{III}l_M(z(t))$,
$^{IV}m_M(z(t))$, $^{IV}n_M(z(t))$, $^{IV}o_M(z(t))$, $^{IV}p_M(z(t))$

dont plusieurs (x) groupes de valeurs d'amplitude successifs :

$\Delta^{I}a_{M1}(z),\ldots, \Delta^{I}a_{MX}(z),\ldots\ldots, \Delta^{I}d_{M1}(z),\ldots, \Delta^{I}d_{MX}(z)$.
$\Delta^{II}m_{M1}(z),\ldots, \Delta^{II}m_{MX}(z),\ldots\ldots, \Delta^{II}h_{M1}(z),\ldots, \Delta^{II}h_{MX}(z)$,
$\Delta^{III}i_{M1}(z),\ldots, \Delta^{III}i_{MX}(z),\ldots\ldots, \Delta^{III}l_{M1}(z),\ldots, \Delta^{III}l_{MX}(z)$,
$\Delta^{IV}m_{M1}(z),\ldots, \Delta^{IV}m_{MX}(z),\ldots\ldots, \Delta^{IV}p_{M1}(z),\ldots, \Delta^{IV}p_{MX}(z)$

sont simultanément prélevés et communiqués à un circuit de calcul de pré-traitement (9), qui dans un premier temps associe les unes aux autres les valeurs d'amplitude provenant d'éléments de capteur respectifs de manière à générer quatre signaux exempts d'erreurs de mesure électriques, associés ensuite les uns aux autres pour la suppression de grandeurs de champ parasite externes en formant plusieurs (x) paires de valeur d'amplitude de circuit de calcul $\Delta u_{M1}(z), \ldots, \Delta u_{MX}(z), \Delta V_{M1}(z), \ldots, \Delta v_{MX}(z)$, à partir desquelles sont simultanément formées des paires de moyennes $U_M(z)$, $V_M(z)$ correspondantes, et **en ce que**
la valeur de position fine $z(U_M, V_M) = m\,\mu(U_E, V_E)$ actuelle est déterminée **en ce que** la différence des produits croisés

$$U_M(z)\ V_E(\mu(z))-V_M(z)\ U_E(\mu(z))$$

tend vers zéro (fig. 8 et fig. 9).

5. Procédé selon l'une des revendications 1 à 4, **caractérisé en ce que** pour la formation distincte continue de moyennes (A(z), B(z) ...), une nouvelle moyenne est respectivement formée à partir d'une moyenne précédente pourvue d'un premier facteur de pondération, formée à partir d'un nombre définissable de valeurs d'amplitude individuelles précédemment saisies, et de la valeur d'amplitude correspondante la plus récente, pourvue d'un deuxième facteur de pondération.

6. Procédé selon l'une des revendications 1 à 5, **caractérisé en ce que** le mode d'étalonnage est exécuté avant le mode de mesure proprement dit au moyen du dispositif d'étalonnage (31) et d'un étalon de mesure (30) externe couplé mécaniquement pour l'obtention d'une corrélation définie avec l'unité d'excitateur et délivrant la valeur de position fine d'étalonnage ($\mu$(z)), $\mu$ =z/m et m = 1 en cas de couplage fixe.

7. Procédé de détermination de la position d'un corps à surveiller, dont la zone de déplacement est divisée en plusieurs segments de mesure comptés de manière absolue d'une part, et pour lesquels des valeurs de position fine (z) selon l'une des revendications 1 à 5 sont déterminés d'autre part, **caractérisé en ce qu'**en mode d'étalonnage et en mode de mesure, les signaux de sortie $a_E$(z(t)), $b_E$(z(t)), ... de l'unité de capteur (7) ainsi que les moyennes A(z), B(z), ... déduites de ceux-ci sont au moins semi-périodiques, la longueur de demi-période correspondant à la longueur du segment de mesure correspondant.

8. Procédé selon l'une des revendications précédentes, **caractérisé en ce qu'**en mode d'étalonnage et en mode de mesure, les signaux de capteur sont délivrés par des capteurs de champ magnétique.

9. Procédé selon l'une des revendications précédentes, **caractérisé en ce que** l'unité de capteur (7) comprend un multiplexeur (2) au moyen duquel, en mode d'étalonnage et en mode de mesure, les signaux des plusieurs éléments de capteur sont communiqués de manière alternée à un canal de traitement unique par un multiplexeur comprenant un amplificateur (3) et un convertisseur analogique/numérique servant à donner une forme numérique aux signaux de sortie a(z(t)), b(z(t)), ... de l'unité de capteur (7), **en ce qu'**un démultiplexeur est utilisé pour la restauration de la pluralité de canaux et **en ce qu'**un stockage intermédiaire est effectué pour au moins une des valeurs d'amplitude $\Delta$a(z), $\Delta$b(z), ..., relevant de la même valeur de position fine (z), jusqu'à ce que les autres soient disponibles, pour que celles-ci puissent continuer à être traitées simultanément.

10. Procédé selon l'une des revendications précédentes, **caractérisé en ce qu'**en mode de mesure, des valeurs initiales ô(t) sont calculées par le circuit de calcul (10) à partir des valeurs de mesure $A_M$(z), $B_M$(z), ... respectives et des valeurs de référence réelles $A_E(\mu)$, $B_E(\mu)$, ... respectives que celui-ci reçoit de la mémoire de valeurs de comparaison (14),
**en ce que**, pour former une boucle d'asservissement, une valeur d'entrée variable $\varphi$(t) générée par un circuit de rétrocouplage (15), fonction de la valeur initiale ô(t) du circuit de calcul (10), est communiquée à une entrée de commande de la mémoire de valeurs de comparaison (14),
et **en ce que** la valeur d'entrée $\varphi$(t) de la mémoire de valeurs de comparaison (14) est fixée, si la valeur initiale ô(t) du circuit de calcul (10) est au moins approximativement égale à zéro, le multiple par m de la valeur de position fine $\mu(A_E, B_E, ...)$ connue, relevant des valeurs de référence $A_E(\mu)$, $B_E(\mu)$, ... réelles concernées et mémorisée dans la mémoire de valeurs de comparaison (14), égal à la valeur de position fine (z) recherchée : $z(A_M,B_M, ...) = m\ \mu(A_E, B_E, ...)$.

11. Procédé selon la revendication 10, **caractérisé en ce que** le signal incrémentiel servant à modifier la valeur d'entrée p(t) de la mémoire de valeurs de comparaison (14) et le signe antéposé de la valeur initiale ô(t) du circuit de calcul (10) peuvent être rendus disponibles pour un utilisateur via une interface (16) en plus de la valeur de position fine (z).

12. Procédé selon l'une des revendications précédentes, **caractérisé en ce que** les niveaux de tension de l'alimentation en tension des capteurs sont commandés en fonction des amplitudes des signaux de capteur, de manière à assurer un ajustement optimal de la plage de tension de signal à la plage de tension d'entrée des unités de circuit traitant les signaux de capteur.

13. Procédé selon l'une des revendications précédentes, **caractérisé en ce que** les valeurs de référence réelles $A_E(\mu)$, $B_E(\mu)$, ... et la valeur de position fine connue $\mu(A_E, B_E, ...)$ sont mémorisées sous forme de valeurs de base discrètes, entre lesquelles une interpolation est effectuée pour la détermination de valeurs intermédiaires.

14. Procédé selon l'une des revendications précédentes, **caractérisé en ce que** l'erreur de poursuite due aux temps d'exécution et de traitement est corrigée.

15. Dispositif pour l'exécution du procédé selon une ou plusieurs des revendications précédentes.

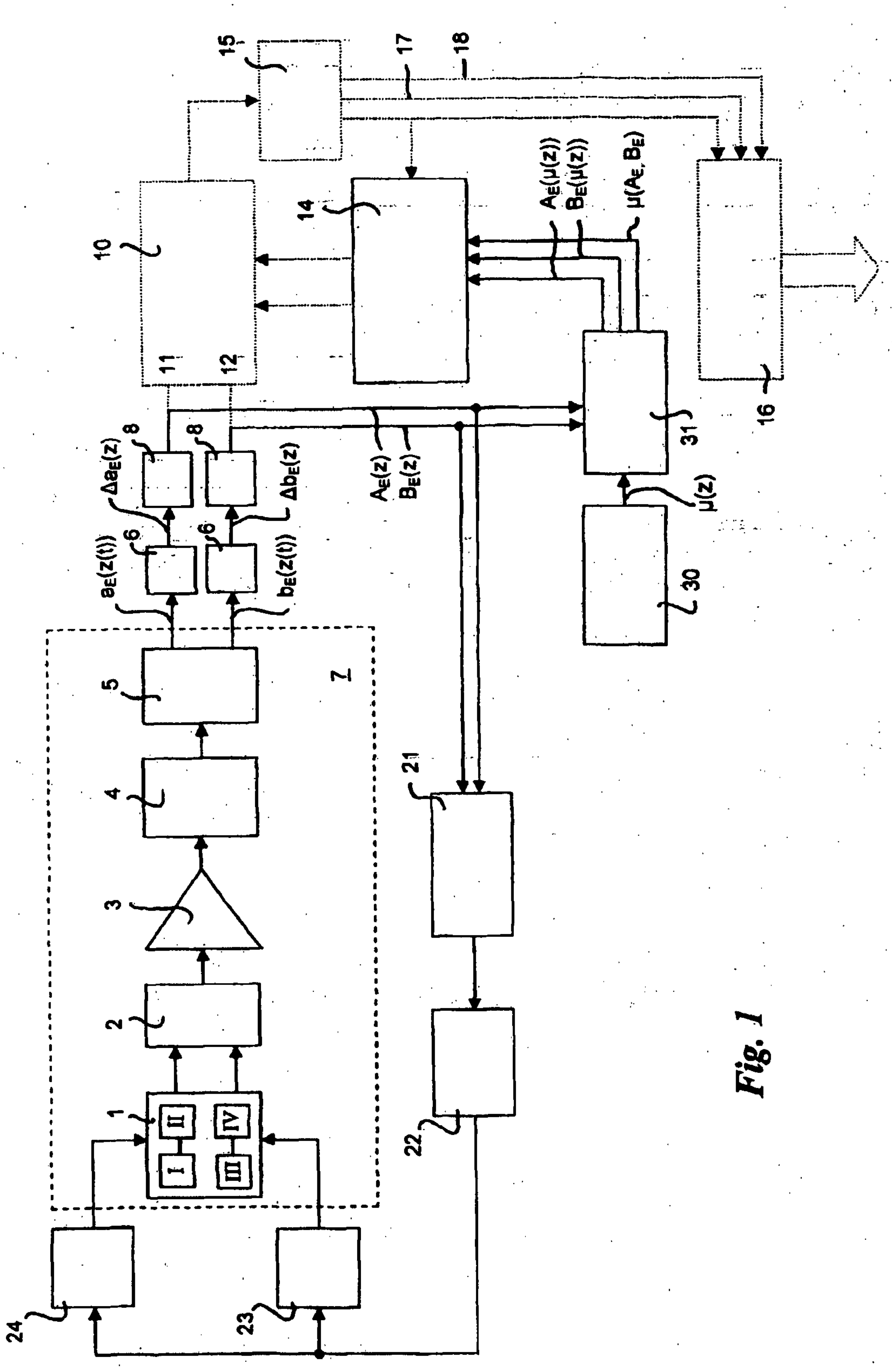
1
I
II
III
IV
2
3
4
5
6
8
7
10
11
12
14
15
16
17
18
21
22
23
24
30
31
$a_E(z(t))$
$b_E(z(t))$
$\Delta a_E(z)$
$\Delta b_E(z)$
$A_E(z)$
$B_E(z)$
$\mu(z)$
$A_E(\mu(z))$
$B_E(\mu(z))$
$\mu(A_E, B_E)$

Fig. 1

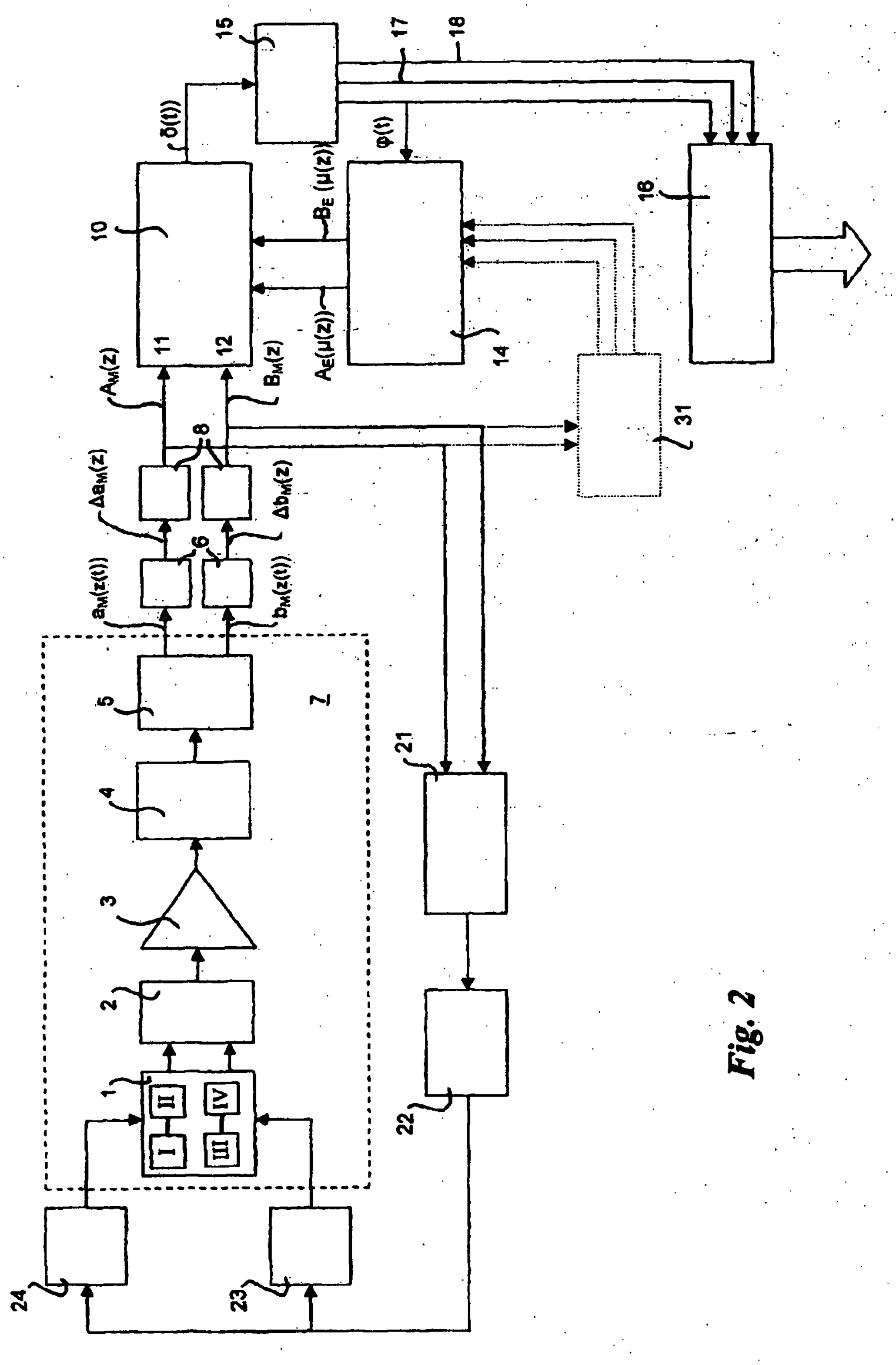
1
I
II
III
IV
2
3
4
5
7
6
8
10
11
12
14
15
16
17
18
21
22
23
24
31
$a_M(z(t))$
$b_M(z(t))$
$\Delta a_M(z)$
$\Delta b_M(z)$
$A_M(z)$
$B_M(z)$
$A_E(\mu(z))$
$B_E(\mu(z))$
$\delta(t)$
$\varphi(t)$

*Fig. 2*

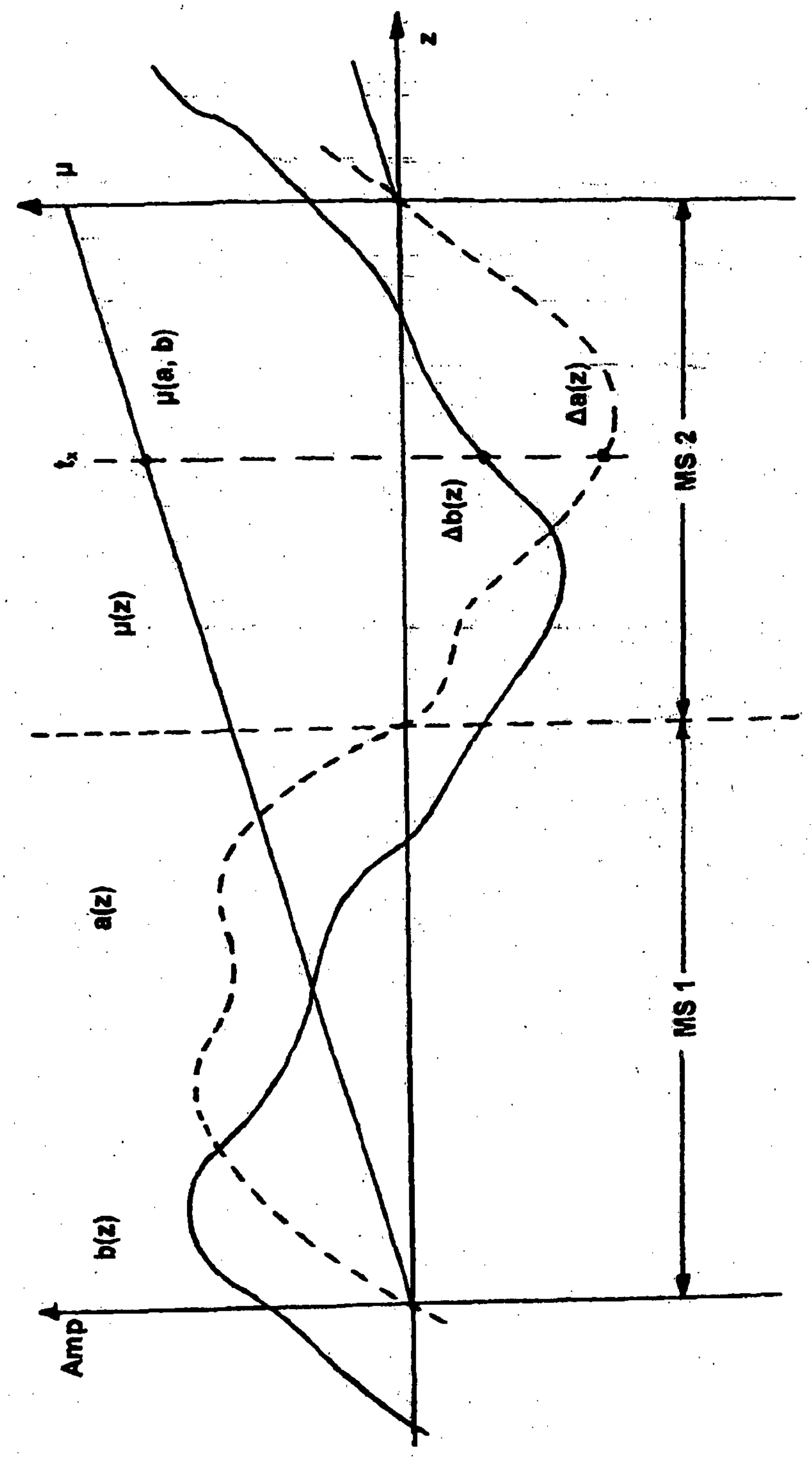


Fig. 3

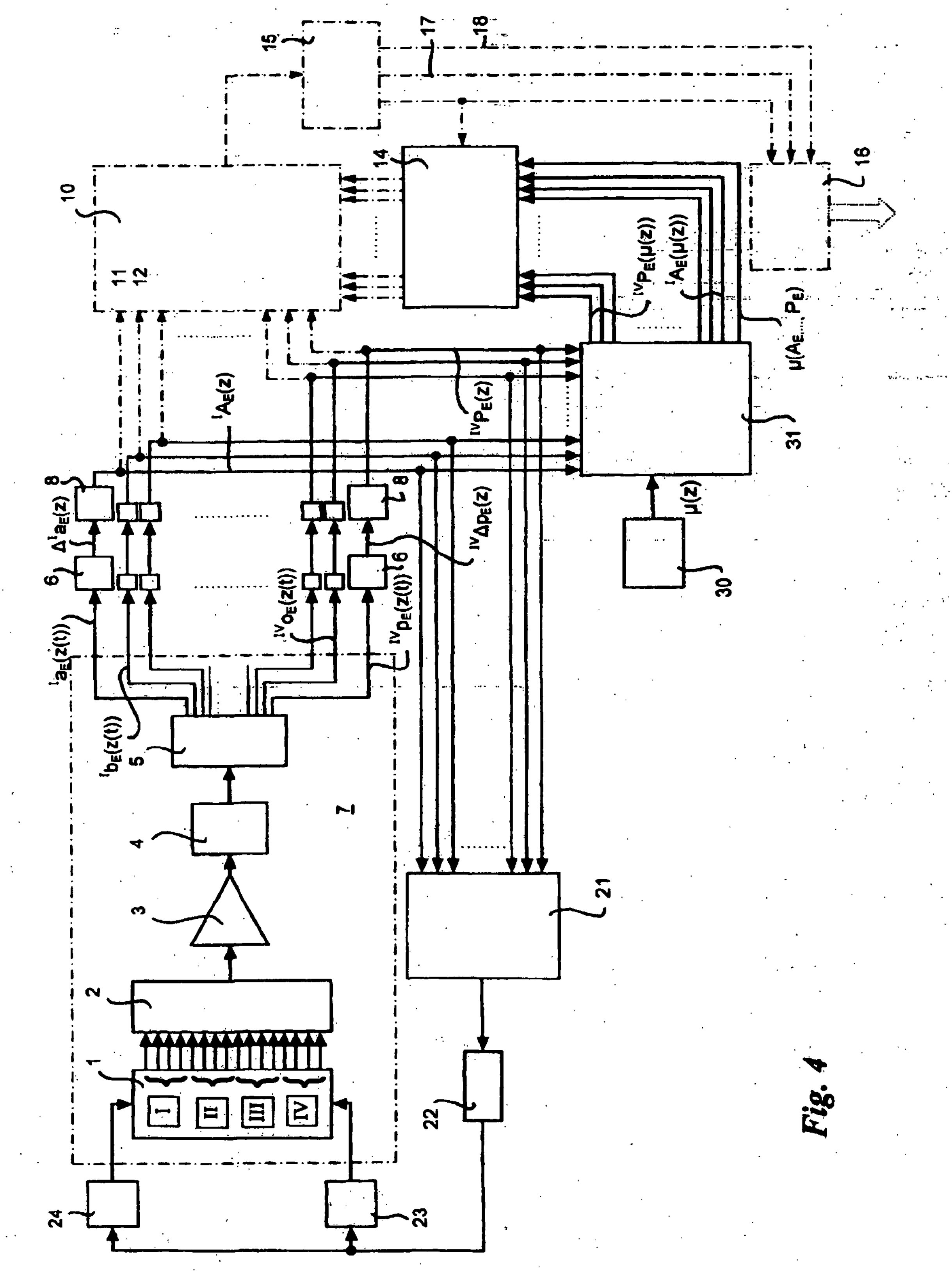


*Fig. 4*

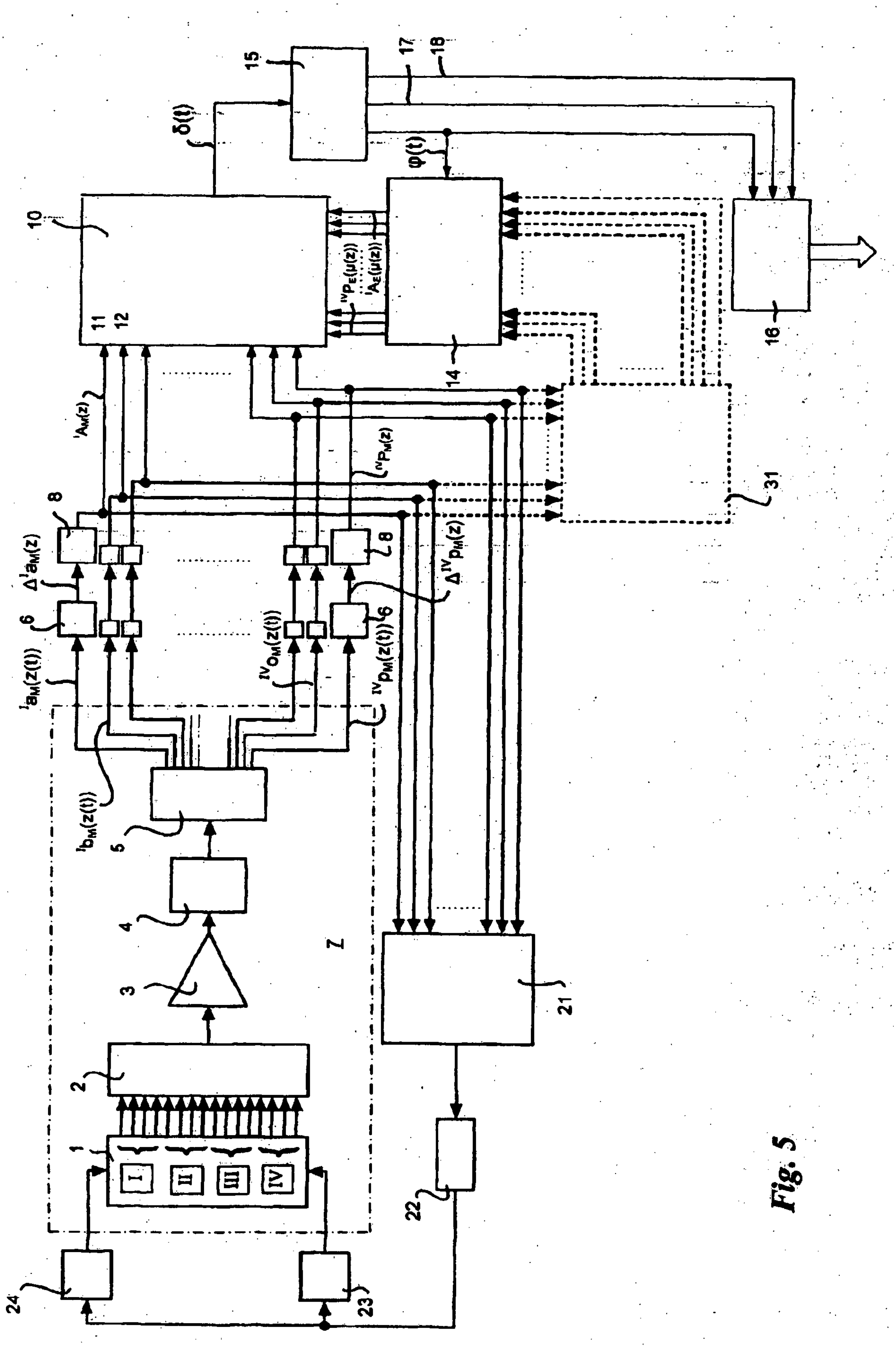

Fig. 5

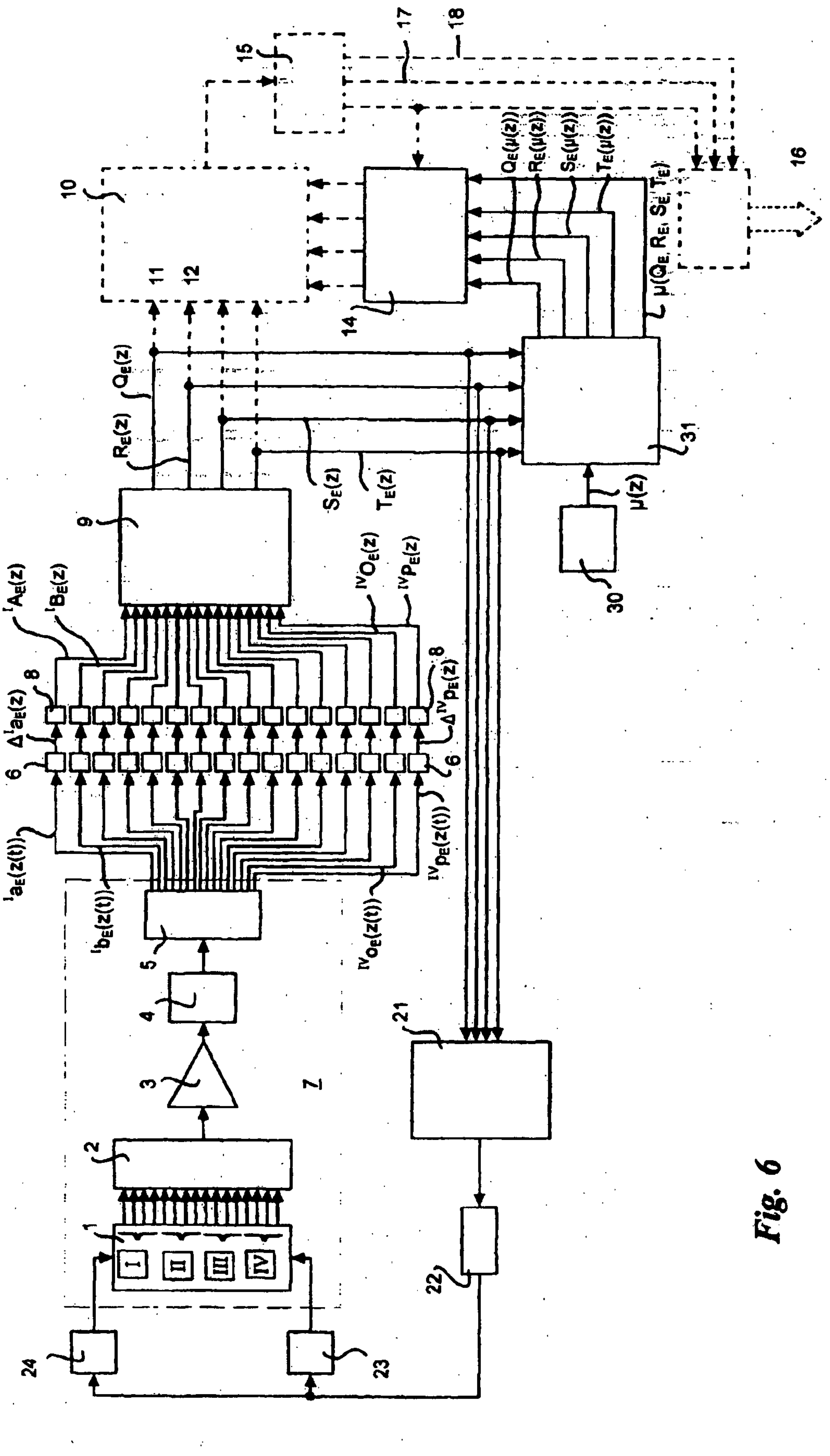

Fig. 6

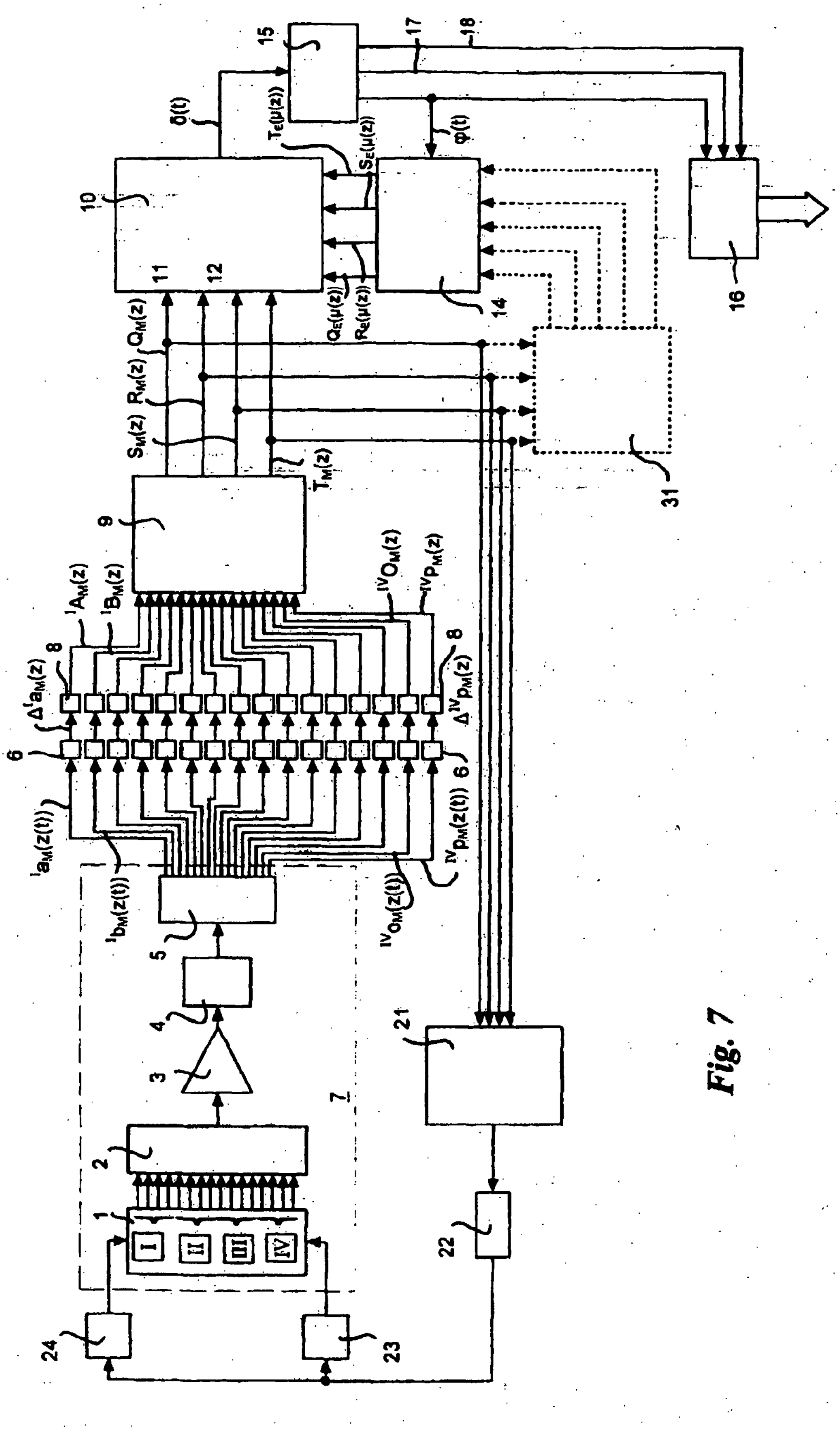
1
2
3
4
5
6
7
8
9
10
11
12
14
15
16
17
18
21
22
23
24
31
I
II
III
IV
δ(t)
φ(t)
$T_E(\mu(z))$
$S_E(\mu(z))$
$Q_E(\mu(z))$
$R_E(\mu(z))$
$Q_M(z)$
$R_M(z)$
$S_M(z)$
$T_M(z)$
$^IA_M(z)$
$^IB_M(z)$
$^{IV}O_M(z)$
$^{IV}P_M(z)$
$\Delta^Ia_M(z)$
$\Delta^{IV}p_M(z)$
$^Ia_M(z(t))$
$^Ib_M(z(t))$
$^{IV}o_M(z(t))$
$^{IV}p_M(z(t))$

*Fig. 7*

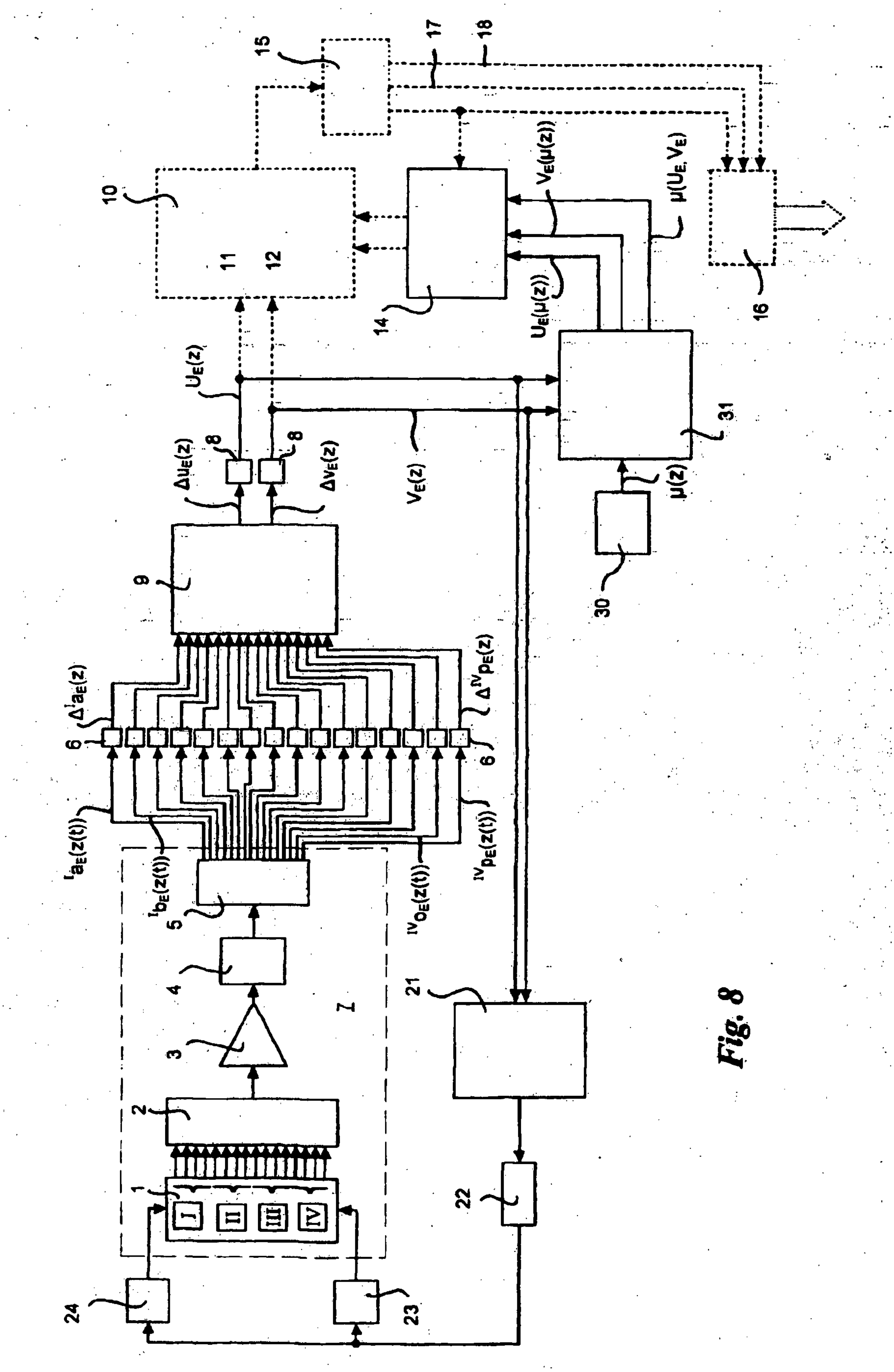
1
2
3
4
5
6
7
8
9
10
11
12
14
15
16
17
18
21
22
23
24
30
31
I
II
III
IV
$U_E(z)$
$V_E(z)$
$\Delta U_E(z)$
$\Delta V_E(z)$
$V_E(\mu(z))$
$U_E(\mu(z))$
$\mu(U_E, V_E)$
$\mu(z)$
$^Ia_E(z(t))$
$^Ib_E(z(t))$
$^{IV}o_E(z(t))$
$^{IV}p_E(z(t))$
$\Delta^I a_E(z)$
$\Delta^{IV} p_E(z)$

Fig. 8

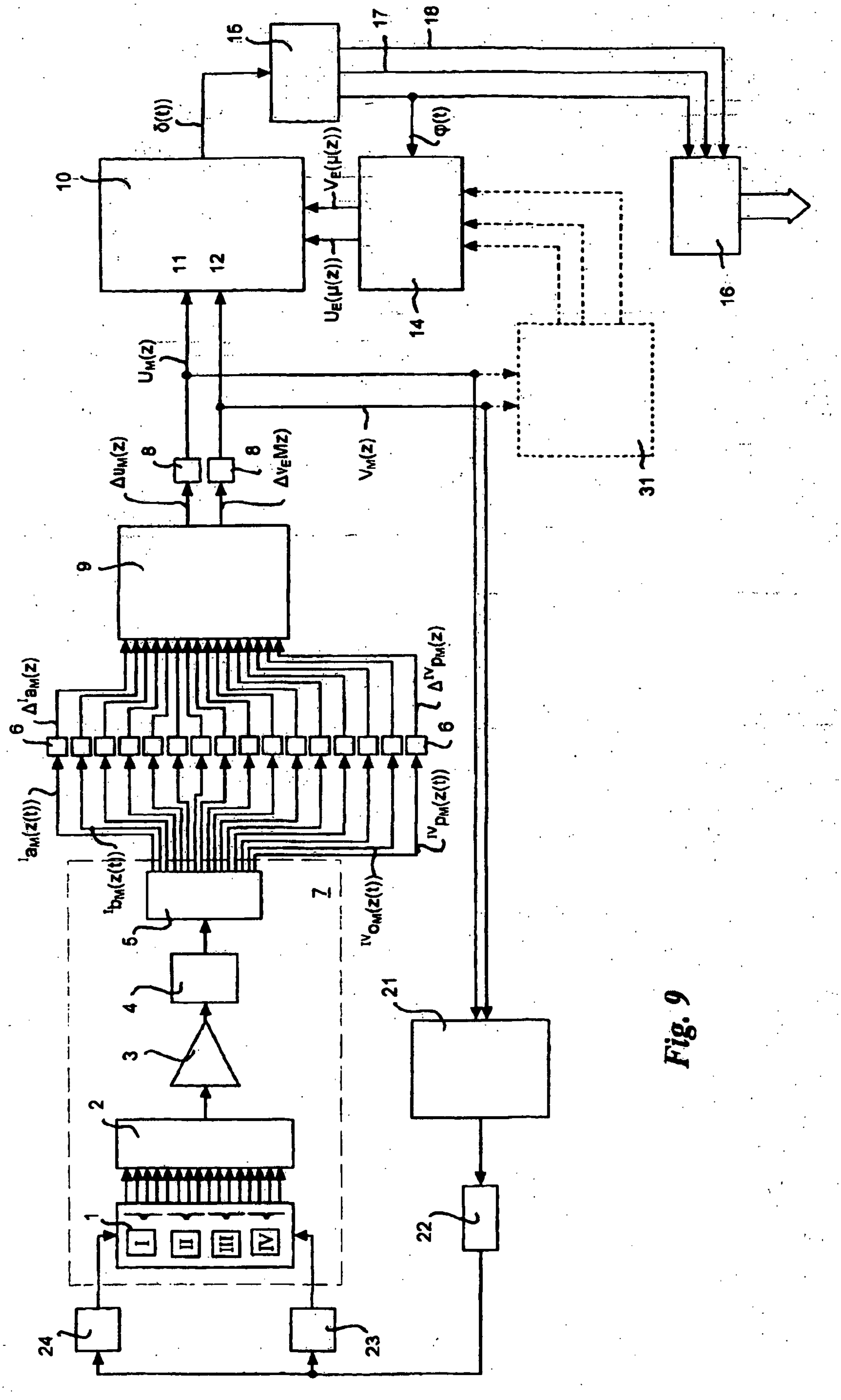

1
2
3
4
5
6
7
8
9
10
11
12
14
15
16
17
18
21
22
23
24
31
I
II
III
IV
δ(t)
φ(t)
$U_M(z)$
$V_M(z)$
$U_E(\mu(z))$
$V_E(\mu(z))$
$\Delta u_M(z)$
$\Delta v_E Mz)$
$\Delta^I a_M(z)$
$\Delta^{IV} p_M(z)$
$^I a_M(z(t))$
$^I b_M(z(t))$
$^{IV} o_M(z(t))$
$^{IV} p_M(z(t))$


Fig. 9

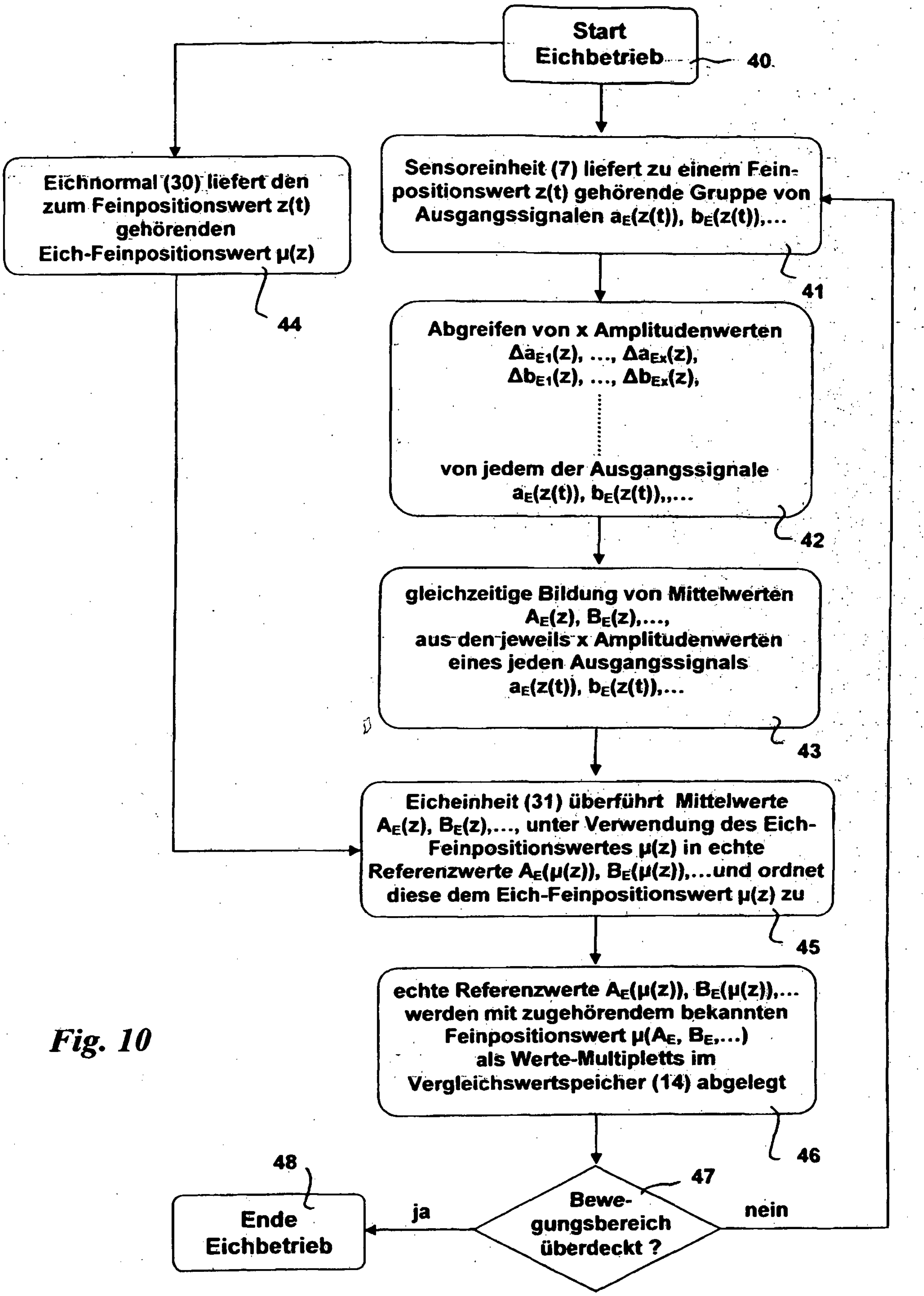
Start
Eichbetrieb
40
Eichnormal (30) liefert den zum Feinpositionswert z(t) gehörenden Eich-Feinpositionswert μ(z)
44
Sensoreinheit (7) liefert zu einem Feinpositionswert z(t) gehörende Gruppe von Ausgangssignalen $a_E(z(t))$, $b_E(z(t))$,...
41
Abgreifen von x Amplitudenwerten $\Delta a_{E1}(z)$, ..., $\Delta a_{Ex}(z)$, $\Delta b_{E1}(z)$, ..., $\Delta b_{Ex}(z)$,
von jedem der Ausgangssignale $a_E(z(t))$, $b_E(z(t))$,...
42
gleichzeitige Bildung von Mittelwerten $A_E(z)$, $B_E(z)$,..., aus den jeweils x Amplitudenwerten eines jeden Ausgangssignals $a_E(z(t))$, $b_E(z(t))$,...
43
Eicheinheit (31) überführt Mittelwerte $A_E(z)$, $B_E(z)$,..., unter Verwendung des Eich-Feinpositionswertes μ(z) in echte Referenzwerte $A_E(\mu(z))$, $B_E(\mu(z))$,...und ordnet diese dem Eich-Feinpositionswert μ(z) zu
45
echte Referenzwerte $A_E(\mu(z))$, $B_E(\mu(z))$,... werden mit zugehörendem bekannten Feinpositionswert $\mu(A_E, B_E,...)$ als Werte-Multipletts im Vergleichswertspeicher (14) abgelegt
46
Bewegungsbereich überdeckt ?
47
ja
nein
Ende
Eichbetrieb
48

*Fig. 10*

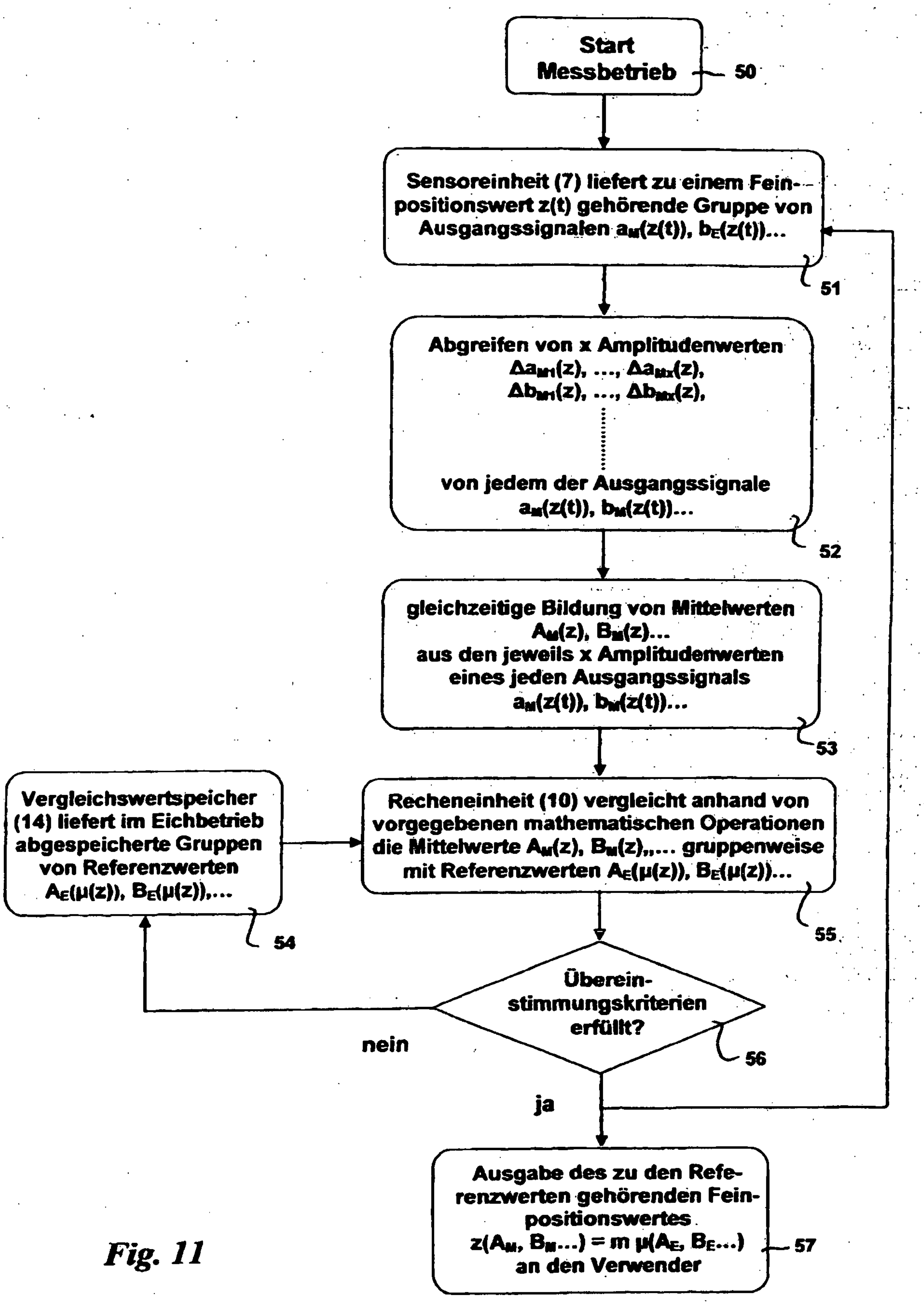
Start
Messbetrieb
50
Sensoreinheit (7) liefert zu einem Fein-positionswert z(t) gehörende Gruppe von Ausgangssignalen $a_M(z(t))$, $b_E(z(t))$...
51
Abgreifen von x Amplitudenwerten
$\Delta a_{M1}(z)$, ..., $\Delta a_{Mx}(z)$,
$\Delta b_{M1}(z)$, ..., $\Delta b_{Mx}(z)$,
von jedem der Ausgangssignale
$a_M(z(t))$, $b_M(z(t))$...
52
gleichzeitige Bildung von Mittelwerten
$A_M(z)$, $B_M(z)$...
aus den jeweils x Amplitudenwerten
eines jeden Ausgangssignals
$a_M(z(t))$, $b_M(z(t))$...
53
Vergleichswertspeicher (14) liefert im Eichbetrieb abgespeicherte Gruppen von Referenzwerten
$A_E(\mu(z))$, $B_E(\mu(z))$,...
54
Recheneinheit (10) vergleicht anhand von vorgegebenen mathematischen Operationen die Mittelwerte $A_M(z)$, $B_M(z)$,,... gruppenweise mit Referenzwerten $A_E(\mu(z))$, $B_E(\mu(z))$...
55
Überein-stimmungskriterien erfüllt?
56
nein
ja
Ausgabe des zu den Refe-renzwerten gehörenden Fein-positionswertes
$z(A_M, B_M...) = m\ \mu(A_E, B_E...)$
an den Verwender
57

*Fig. 11*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004062448 A1
- DE 4224225 A1
- DE 102010050356